(19) Europäisches Patentamt
European Patent Office
Office européen des brevets

(11) **EP 4 258 583 B1**

(12) **EUROPEAN PATENT SPECIFICATION**

(45) Date of publication and mention
of the grant of the patent:
**23.04.2025 Bulletin 2025/17**

(21) Application number: **20964554.8**

(22) Date of filing: **08.12.2020**

(51) International Patent Classification (IPC):
**H04L 5/00** (2006.01)    **H04W 52/02** (2009.01)

(52) Cooperative Patent Classification (CPC):
**H04L 5/001; H04L 5/00; H04L 5/0048;
H04L 5/0098; H04L 5/0078; H04W 52/028**

(86) International application number:
**PCT/CN2020/134695**

(87) International publication number:
**WO 2022/120609 (16.06.2022 Gazette 2022/24)**

(54) **WIRELESS COMMUNICATION METHOD AND DEVICE**

VERFAHREN UND VORRICHTUNG ZUR DRAHTLOSEN KOMMUNIKATION

PROCÉDÉ ET DISPOSITIF DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.10.2023 Bulletin 2023/41**

(73) Proprietor: **GUANGDONG OPPO MOBILE
TELECOMMUNICATIONS
CORP., LTD.
Dongguan, Guangdong 523860 (CN)**

(72) Inventor: **HU, Rongyi
Dongguan, Guangdong 523860 (CN)**

(74) Representative: **Kraus & Lederer PartGmbB
Thomas-Wimmer-Ring 15
80539 München (DE)**

(56) References cited:
EP-A1- 3 742 845          CN-A- 102 244 927
CN-A- 102 378 325         CN-A- 110 831 055
US-A1- 2012 282 942

• **MEDIATEK INC: "Efficient and low latency SCell
data transmission for NR CA", vol. RAN WG1, no.
Chongqing, China; 20191014 - 20191020, 5
October 2019 (2019-10-05), XP051789842,
Retrieved from the Internet <URL:http://
www.3gpp.org/ftp/tsg_ran/WG1_RL1/
TSGR1_98b/Docs/R1-1911062.zip> [retrieved on
20191005]**
• **APPLE: "On activation delay extension due to
multiple SCell activations", vol. RAN WG4, no.
Reno, NV, USA; 20191118 - 20191122, 8
November 2019 (2019-11-08), XP051822527,
Retrieved from the Internet <URL:https://
ftp.3gpp.org/tsg_ran/WG4_Radio/TSGR4_93/
Docs/R4-1913500.zip R4-1913500 On activation
delay extension due to multiple SCell
activations.docx> [retrieved on 20191108]**
• **QUALCOMM INCORPORATED: "Remaining
Issues on SCell activation/deactivation
requirements in NR- U", vol. RAN WG4, no.
Online; 20201102 - 20201113, 23 October 2020
(2020-10-23), XP052419090, Retrieved from the
Internet <URL:https://ftp.3gpp.org/tsg_ran/
WG4_Radio/TSGR4_97_e/Docs/R4-2016565.zip
R4-2016565 - Remaining Issues On SCell
activation and deactivation requirements in NR-
U.docx> [retrieved on 20201023]**

## Description

### TECHNICAL FIELD

Embodiments of the present disclosure relate to the field of communications, and more particularly, to a wireless communication method and device.

### BACKGROUND

A Secondary Cell (SCell) is configured by Radio Resource Control (RRC) dedicated signaling. The initial configuration state is a deactivated state, in which data cannot be transmitted and received. The SCell can then be activated through Media Access Control (MAC) Control Element (CE) to transmit and receive data. Activation, deactivation, addition and deletion of a secondary carrier may all result in interruption of transmission of User Equipment (UE) and thus lead to an interruption duration.

Up to now, the interruption duration has been defined only in terms of Synchronization Signal/PBCH Block (SSB), including Automatic Gain Control (AGC) setting based on SSB and timing tracking based on SSB. Considering the long cycle of SSB, it will affect the time when SCell is actually activated, thus resulting in too long interruption duration and affecting system performance.

In addition, MEDIATEK INC: "Efficient and low latency SCell data transmission for NR CA", 3GPP DRAFT; R1-1911062, published on 5 October 2019, discloses that a temporary reference signal (RS) can be triggered in the secondary cell activation process, so that UE may perform timing tracking based on the temporary RS. And UE can utilize both SSB and temporary RS to perform the time-frequency tracking, the one that comes first will be used first.

EP3742845A1 discloses the MAC CE signalling is not only used for the terminal device to activate an SCell, but also used for the network device to activate a downlink SP RS. That is, the MAC CE signalling may be reused to activate an SCell and activate a downlink SP RS. Specifically, the downlink SP RS is configured by the network-side device and may be a SP TRS and/or a SP CSI-RS.

### SUMMARY

The present invention is defined in the independent claims.

Embodiments of the present disclosure provide a wireless communication method and device that can flexibly control delay and interruption duration in a processing procedure and improve system performance.

A first aspect provides a wireless communication method which is defined in claim 1.

A second aspect provides a wireless communication method which is defined in claim 7.

A third aspect provides a terminal device which is defined in claim 2.

A fourth aspect provides a network device which is defined in claim 8.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF DRAWINGS

FIG. 1 is a diagram showing an example of a scenario according to an embodiment of the present disclosure.

FIG. 2 is a schematic diagram showing delay generated during activation or deactivation of an SCell according to an embodiment of the present disclosure.

FIG. 3 is a schematic diagram showing an interruption duration generated during activation or deactivation of an SCell according to an embodiment of the present disclosure.

FIG. 4 is a schematic flowchart illustrating a wireless communication method according to an embodiment of an present disclosure.

FIG. 5 is a schematic block diagram showing a terminal device according to an embodiment of the present disclosure.

FIG. 6 is a schematic block diagram showing a network device according to an embodiment of the present disclosure.

FIG. 7 is a schematic block diagram showing a communication device according to an embodiment of the present disclosure.

FIG. 8 is a schematic block diagram of a chip according to an embodiment of the present disclosure.

## DESCRIPTION OF EMBODIMENTS

The technical solutions in the embodiments of the present disclosure are described below in conjunction with the accompanying drawings.

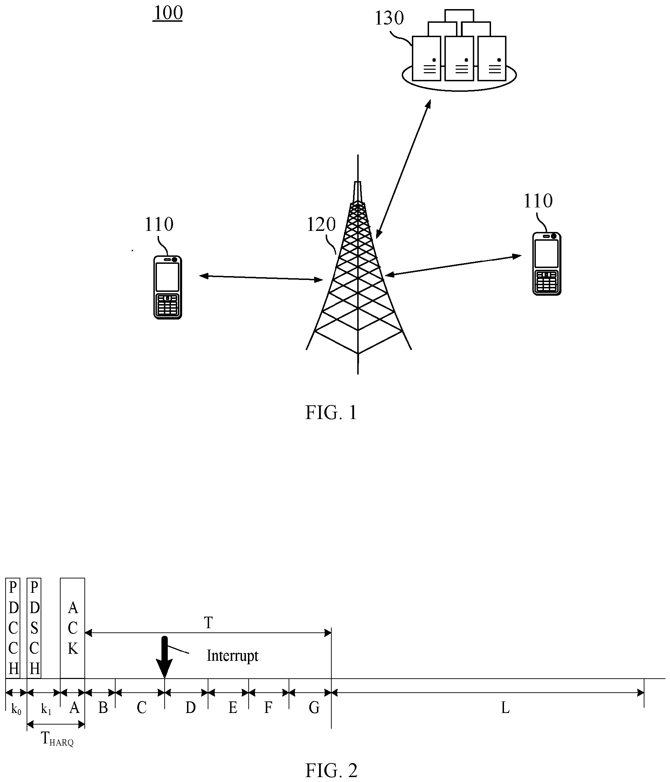

FIG. 1 is a schematic diagram showing an application scenario according to an embodiment of the present disclosure.

As shown in FIG. 1, a communication system 100 can include terminal devices 110 and a network device 120. The network device 120 can communicate with the terminal device 110 through an air interface. Multi-service transmission is supported between the terminal device 110 and the network device 120.

It should be understood that embodiments of the present disclosure are only illustrated by taking the communication system 100 as an example, but are not limited thereto. That is to say, technical solutions of the embodiments of the present disclosure can be applied to various communication systems, such as a Long Term Evolution (LTE) system, an LTE Time Division Duplex (TDD) system, a Universal Mobile Telecommunication System (UMTS) system, a Fifth Generation (5G) communication system (also known as New Radio (NR) communication system), future communication systems, or the like.

In the communication system 100 shown in FIG. 1, the network device 120 can be an access network device that communicates with the terminal device 110. An access network device can provide communication coverage for a specific geographic area and can communicate with the terminal devices 110 (such as UEs) located within the coverage area.

The network device 120 can be an Evolutional Node B (eNB or eNodeB) in a Long Term Evolution (LTE) system, or a Next Generation Radio Access Network (NG RAN) device, or a base station (gNB) in an NR system, or a wireless controller in a Cloud Radio Access Network (CRAN). Or the network device 120 can be a relay station, access point, vehicle-mounted device, wearable device, hub, switch, bridge, router, network device in a future evolved Public Land Mobile Network (PLMN), or the like.

The terminal device 110 can be any terminal device, including, but not limited to, a terminal device connected wiredly or wirelessly to the network device 120 or another terminal device.

For example, the terminal device 110 may refer to an access terminal, a user device (UE), a user unit, a user station, a mobile station, a mobile platform, a remote station, a remote terminal, a mobile device, a user terminal, a terminal, a wireless communication device, a user agent, or a user equipment. The access terminal can be a cellular phone, cordless phone, Session Initiation Protocol (SIP) phone, Wireless Local Loop (WLL) station, Personal Digital Assistant (PDA), handheld device with wireless communication capabilities, computing device, or another processing device connected to a wireless modem, in-vehicle device, wearable device, and terminal device in a 5G network or in a future evolving network.

The terminal device 110 can be used for Device-to-Device (D2D) communication.

The wireless communication system 100 can also include a core network device 130 communicating with a base station. The core network device 130 can be a 5G Core network (5GC) device, such as an Access and Mobility Management Function (AMF), an Authentication Server Function (AUSF), a User Plane Function (UPF), or a Session Management Function (SMF). Optionally, the core network device 130 can also be an Evolved Packet Core (EPC) device in an LTE network, such as Session Management Function + Core Packet Gateway (SMF+PGW-C) device. It should be understood that SMF+PGW-C can simultaneously implement the functions that SMF and PGW-C can implement. In the course of network evolution, the above core network devices may also be called other names, or new network entities may be formed by partitioning the functions of the core network, for which the embodiments of the present disclosure make no limitation.

Communication between various functional units in the communication system 100 can also be achieved by establishing a connection through the next generation (NG) interface.

For example, a terminal device establishes an air interface connection with an access network device through an NR interface, to transmit user-plane data and control-plane signaling. The terminal device can establish a control-plane signaling connection with AMF through NG interface 1 (N1 for short). An access network device, such as a next generation wireless access base station (gNB), can establish a user-plane data connection with UPF through NG interface 3 (N3 for short). The access network device can establish a control-plane signaling connection with AMF through NG interface 2 (N2 for short). UPF can establish a control-plane signaling connection with SMF through NG interface 4 (N4 for short). UPF can exchange user-plane data with data network via NG interface 6 (N6 for short). AMF can establish a control-plane signaling connection with SMF through NG interface 11 (N11 for short). SMF can establish a control-plane signaling connection with PCF through NG interface 7 (N7 for short).

FIG. 1 exemplarily shows a base station, a core network device, and two terminal devices. Optionally, the wireless communication system 100 may include multiple base station devices, and each base station may have a different number of terminal devices within its coverage, for which the embodiment of the present disclosure makes no limitation.

It should be understood that devices with communication capabilities in the network/system in the embodiment of the present disclosure can all be referred to as communication devices. Taking the communication system 100 shown in Fig. 1 as an example, the communication system can include the network device 120 and the terminal device 110 with communication capabilities, and the network device 120 and the terminal device 110 can be the devices which are mentioned above and will be not repeated here. The communication devices may also include other devices in the communication system 100, such as network controllers, mobile management entities, and other network entities, which are not limited in the embodiment of the present disclosure.

It should be understood that the terms "system" and "network" in this disclosure are often used interchangeably. The term "and/or" in this disclosure is simply used to described an association relationship between the associated objects, indicating that there can be three relationships. For example, A and/or B can represent three cases: only A exists, both A and B exist, and only B exists. In addition, the character "/" in this disclosure generally indicates that objects before and after the symbol is in a relationship of "OR".

To facilitate understanding of the solution of the present disclosure, the scheme of carrier aggregation is described below.

Carrier Aggregation (CA) allows, by jointly scheduling and using resources on multiple Component Carriers (CCs), an NR system to support a greater bandwidth, thereby enabling a higher peak system rate. Based on the continuity of the aggregated carriers on the spectrum, CA can be divided into continuous carrier aggregation and discontinuous carrier aggregation. According to whether the bands on which the aggregated carriers are located are the same, it can be divided into intra-band carrier aggregation and inter-band carrier aggregation.

In NR CA, there is one and only one Primary Cell Component (PCC). PCC provides RRC signaling connection, Non-Access Stratum (NAS) function, security, etc. Physical Uplink Control Channel (PUCCH) exists on PCC and only on PCC. SCell Component (SCC) only provides additional wireless resources. PCC and SCC are both called service areas. It is also specified in the standard that up to five aggregated carriers can be supported, that is, the maximum bandwidth after aggregation is 100MHZ, and the aggregated carriers belong to the same base station. All aggregated carriers use the same Cell Radio Network Temporary Identity (C-RNTI), and the implementation of base stations ensures that C-RNTI does not conflict in the cell where each carrier is located. Since both asymmetric carrier aggregation and symmetric carrier aggregation are supported, it is required that the aggregated carriers must have downlink and may have no uplink. Moreover, there must be Physical Downlink Control Channel (PDCCH) and PUCCH for the primary carrier cell, and only the primary carrier cell has PUCCH, and other secondary carrier cells may have PDCCH.

SCell is configured with RRC-specific signaling, and the initial configuration state is a deactivated state, in which data cannot be transmitted or received. Then the SCell can be activated via MAC CE, to transmit and receive data. This architecture is not optimal in terms of delay of SCell configuration and activation. And this delay reduces the efficiency of CA usage and wireless resources, especially in a small cell deployment scenario. In a dense small cell deployment scenario, each Scell has a high signaling load, especially when each Scell needs to be configured separately. Thus the current CA architecture introduces an additional delay, which limits the use of CA and reduces the benefits of CA load sharing.

Activation, deactivation, addition and deletion of a secondary carrier may cause interruption in the transmission of the terminal device. It should be noted that the activation, deactivation, addition and deletion of a secondary carrier can also be understood as the activation, deactivation, addition and deletion of a Scell. For the convenience of description, the activation, deactivation, addition and deletion of a SCell are collectively referred to as processing procedures for the SCell.

Below is described how to activate BWP.

In R16, dormant BWP is introduced to solve the terminal's power consumption problem. That is, when BWP is configured to be dormant, the terminal does not need to detect PDCCH, which saves the terminal's power consumption. Dormant BWP is configured in three manners: DCI format 2_6, DCI format 0_1/1_1 plus dormant BWP indicator field, and redesigned DCI format 1_1. Specifically, indication can be made as follows.

A "0" value of a bit of a bitmap indicates: an active DL BWP, provided by dormant BWP-Id, for the UE for a corresponding activated SCell.

A "1" value of a bit of the bitmap indicates: an active DL BWP, provided by firstWithinActiveTimeBWP-Id, for the UE for a corresponding active SCell, if a DL BWP is the dormant DL BWP; or a current active DL BWP, for the UE for a corresponding activated SCell, if the current DL BWP is not the dormant DL BWP.

Based on this, the UE sets the active DL BWP to the indicated active DL BWP.

FIG. 2 is a schematic diagram showing delay generated during activation or deactivation of an SCell according to an embodiment of the present disclosure.

As shown in FIG. 2, the terminal device receives a PDCCH within a time period $k_0$ and receives a PDSCH scheduled by the PDCCH within a time period $k_1$. and feeds back an ACK for the PDSCH within a time period A. A time period $T_{HARQ}$ can include the period A and the period $k_1$. A period B is used to obtain parameters for the processing procedure of SCells based on an MAC CE process, such as parameters for activation of the SCells, which can include information of frequency, time, and so on of the SCells used to perform the processing procedure. A time period C can be used to adjust RF-related information, such as the RF-warmup Margin for NW. A time period D can be used to adjust power, such as AGC gain setting. A time period E can be used for cell search. A time period F can be used for time-frequency synchronization, such as time-frq a tracking. A time period G can be used to adjust the Margin for SSB in last part. A time period L can be used for measurements, such as a time $T_{CSI\_reporting}$ for measuring and generating a CSI report. $T_{CSI\_reporting}$ can include a duration for obtaining the first available downlink CSI-RS, a duration for generating a CSI report, and a duration for obtaining the first resource available for the CSI report.

In the processing procedure for an SCell, time periods B, C, D, E, F and G (that is, T) can handle the delay in the processing procedure, and among them D, E, F can be used as an execution window of the processing procedure. During executing the processing procedure by the terminal device, there may arise an interruption, that is, an interruption duration, such as the interruption between C and D shown in FIG. 2.

Each time period in FIG. 2 is illustrated below in conjunction with Table 1.

Table 1

| | $k_1+A$ | B+C | D | E | F | G | L | T |
|---|---|---|---|---|---|---|---|---|
| | 38.21 4 | 38.21 3 | 38.13 3 | 38.13 3 | 38.133 | 38.13 3 | 38.133 | |
| Known cell, Scell measurement cycle is less than or equal to 160ms | $T_{HARQ}$ | 3ms | 0 | 0 | $1*T_{FirstSSB}$ | 2ms | $T_{CSI\_rep}$ orting | Sms+ $T_{FirstSSB}$ |
| Known cell, Scell measurement cycle is more than 160ms | $T_{HARQ}$ | 3ms | $1*T_{FirstSSB\_MAX}$ | 0 | $1*T_{rs}$ | 2ms | $T_{CSI\_rep}$ orting | Sms+ $T_{FirstSSB\_MAX}+ T_{rs}$ |
| Unknown cell | $T_{HARQ}$ | 3ms | $1* T_{FirstSSB\text{-}MAX} +T_{SMTC\_MAX}$ | | $1* T_{rs}$ | 2ms | $T_{CSI\_rep\ orting}$ | Sms+ $T_{FirstSSB\text{-}MAX} +T_{S\ MTC\_MAX} +T_{rs}$ |

Here, a known cell can be interpreted as a cell that has been searched by a terminal device, and an unknown cell can be interpreted as a cell that has not been searched by a terminal device. Based on this, as shown in Table 1, in the processing procedure for a known cell, the duration of E can be 0; and for a known cell with a SCell measurement period less than or equal to 160ms, the duration of D can also be 0. However, for a known cell with a SCell measurement period greater than 160ms, the duration of D is $1 * T_{FirstSSB\_Max}$, that is, the operation within period D needs to be re-executed. Similarly, for an unknown cell, corresponding operations need to be performed within each time period, for example, cell search only for an unknown cell, that is, for an unknown cell, the duration E is not zero. Here, $T_{rs}$ can represent the time spent in cell search.

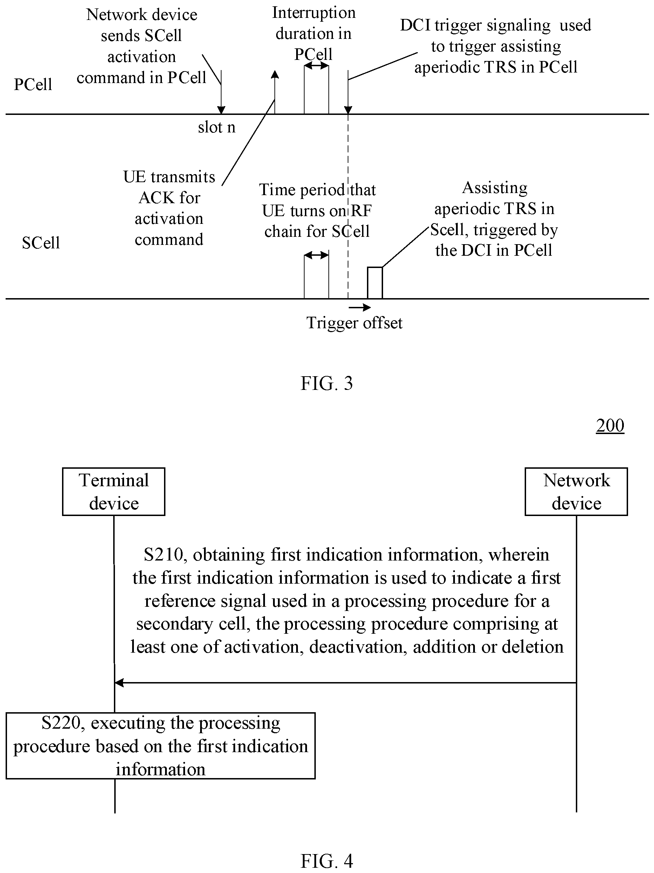

FIG. 3 is a schematic diagram showing an interruption duration generated during activation or deactivation of an SCell according to an embodiment of the present disclosure.

As shown in FIG. 3, the network device transmits a SCell activation command in PCell at time slot n, and the UE transmits an ACK for the activation command. In the time period that UE turns on RF chain for SCell, an interruption occurs in the PCell, that is, an interruption period on PCell occurs. The DCI trigger signaling of the terminal device is used to trigger assisting aperiodic Tracking Reference Signal (TRS) in the PCell. The terminal device acquires the assisting aperiodic TRS burst in SCell, which is triggered by the DCI in the SCell.

For details of interruption, reference can be made to relevant parts of the 3rd Generation Partnership Project (3GPP) protocol TS 38.133.

Taking the processing procedure as an example of activation or deactivation, when activating or deactivating the SCell, the terminal device is allowed to make an interruption on any active serving cell.

The interruption duration for activation/deactivation of an SCell can be up to the duration shown in table 8.2.4.2-1. If the active serving cell is not in the same band as as any of the SCells being activated or deactivated, the requriements for Sync apply for synchronous NR-DC, and for asynchronous NR-DC if the active serving cell is in the same CG as all the SCells being activated; and the requriements for Async apply for asynchronous NR-DC if the active serving cell is not in the same CG as any of the SCells being activated.

Or the interruption duration of the activation/deactivation of the SCell can be up to the duration shown in table 8.2.4.2.2. If the active serving cells are not in the same band as any of the SCells being activated or deactivated, the cell specific reference signals from the active serving cells and the SCells being activated or deactivated are available in the same slot.

Table 8.2.4.2.1

| $\mu$ | NR Slot length(ms) of victim cell | Interruption length (slots) | | Async |
|---|---|---|---|---|
| | | Sync | | Async |
| 0 | 1 | 1 | | 2 |
| 1 | 0.5 | 1 | | 2 |
| 2 | 0.25 | Both aggressor cell and victim cell are on FR2 | 2 | 3 |
| | | Either aggressor cell or victim cell is on FR1 | 3 | |
| 3 | 0.125 | Aggressor cell is on FR2 | 4 | 5 |
| | | Aggressor cell is on FR1 | 5 | |

Here, table 8.2.4.2.2-1 shows the interruption duration for SCell activation/deactivation for inter-band DC/CA, where $\mu$ represents the subcarrier interval. Based on table 8.2.4.2.2-1, it can be seen that the interruption duration is related to the subcarrier interval, the NR slot length of the victim cell, and sync/async.

Table 8.2.4.2.2-2

| $\mu$ | NR Slot length (ms) | Interruption length (slots) |
|---|---|---|
| 0 | 1 | $1 + T_{SMTC\_duration} * N_{slot}^{subframe,\mu}$ |
| 1 | 0.5 | $1 + T_{SMTC\_duration} * N_{slot}^{subframe,\mu}$ |
| 2 | 0.25 | $2 + T_{SMTC\_duration} * N_{slot}^{subframe,\mu}$ |

7

(continued)

| $\mu$ | NR Slot length (ms) | Interruption length (slots) |
|---|---|---|
| 3 | 0.125 | $4 + \mathrm{T}_{SMTC\_duration} * N_{slot}^{subframe,\mu}$ |

Note 1: $\mathrm{T}_{SMTC\_duration}$ measured in subframes is:
the longest SS/PBCH block measurement timing configuration (SMTC) duration among all active serving cells and an SCell being activated, when the SCell is activated;
the longest SMTC duration among all active serving cells in the same band when one SCell is deactivated.

Note 2: $N_{slot}^{subframe,\mu}$ is as defined in TS 38.211 [6].

Here, table 8.2.4.2.2-2 shows the interruption duration for SCell activation/deactivation for intra-band DC/CA, where $\mu$ represents the subcarrier interval. Based on table 8.2.4.2.2-2, it can be seen that interruption duration is related to subcarrier interval, NR timeslot length, $\mathrm{T}_{SMTC\_duration}$ and $N_{slot}^{subframe,\mu}$.

Based on 8.2.4.2.1 and 8.2.4.2.2, it can be known that the activation or deactivation of subcarrier for intra-band and inter-band DC or CA brings different interruptions, that is, generating different interruption durations. Because the interruption duration is defined based on SSB, including AGC setting based on SSB and timing tracking based on SSB. Considering the long cycle of SSB, this will affect the actual activation time of SCell, and thus will lead to excessive interruption duration and affect the system performance.

Embodiments of the present disclosure provide a wireless communication method and device, which can flexibly control the delay and interruption duration in the processing procedure and improve the system performance.

FIG. 2 shows a schematic flowchart of a wireless communication method 200 according to an embodiment of the present disclosure. The method 200 can be executed interactively by the terminal device and the network device. The terminal device shown in FIG. 2 can be the terminal device shown in FIG. 1, and the network device shown in FIG. 2 can be the access network device shown in FIG. 1.

As shown in FIG. 2, the method 200 may include the following actions.

At S210, first indication information is obtained. The first indication information is used to indicate a first reference signal used in a processing procedure for an SCell, the processing procedure including at least one of activation, deactivation, addition or deletion.

At S220, the processing procedure is executed based on the first indication information.

Based on the above technical solution, the first reference signal is indicated by the first indication information, and then the first reference signal is used to perform the processing procedure, which allows flexible configuration of the reference signal, and enables the terminal device to make faster AGC adjustment to reduce the impact of interruption on other cells, thus enabling flexible control of delay and interruption duration in the processing procedure, reducing the terminal complexity, and saving system resources and the like.

In some embodiments of the present disclosure, the first indication information is used to instruct a terminal device to trigger the processing procedure for the SCell and is used to indicate the first reference signal used in the processing procedure.

In some embodiments of the present disclosure, the first indication information is carried in at least one of: Media Access Control Control Element (MAC CE), Downlink Control Information (DCI) or second indication information used to instruct a terminal device to switch Bandwidth Part (BWP).

In the embodiment of the present disclosure, the flexible and fast trigger scheme allows fast processing for the SCell, so as to reduce the delay and improve the system performance.

In some embodiments of the present disclosure, the second indication information is carried in at least one of: Downlink Control Information (DCI), timer configuration information, or Radio Resource Control (RRC) signaling.

In other words, the first indication information can be carried in any of the following ways. Mode 1: MAC-CE configuration triggers the activation of the SCell, and indicates configuration information 1 of the reference signal related to the physical layer. Mode 2: DCI configuration triggers the activation of the SCell, and at the same time DCI indicates configuration information 2 of the reference signal TRS. Mode 3: the activation of the SCell is triggered with and based on BWP switching, and BWP switching can include three ways of trigger, namely, DCI/timer/RRC trigger. The BWP configuration indicates the reference signal configuration information 3 required for the activation of the SCell. The above configuration information 1/2/3 at least includes: the cycle, length and other information of the reference signal.

In some embodiments of the present disclosure, the first reference signal is used in at least one of: adjusting Automatic Gain Control (AGC), cell search or time-frequency synchronization.

In some embodiments of the present disclosure, the first reference signal includes a pilot signal. Optionally, the pilot signal includes at least one of: Synchronous Signal/physical broadcast channel Block (SSB), Channel State Information Reference Signal (CSI-RS) or Tracking Reference Signal (TRS). Of course, the pilot signal can also include other pilot signals, which are not specifically limited in the embodiment of the present disclosure.

In the embodiment of present disclosure, the processing procedure can be executed based on different reference signals, and as a result, different delays and interruption durations will be incurred during the terminal device executing the processing procedure. Then, it is required to redefine the introduced delay and interruption duration based on the type of reference signal, and it is even required to redefine the capability information of terminal device, so that different radio resource management (RRM) requirements are supported through terminal devices with different capabilities.

In some embodiments of the present disclosure, the S220 includes: executing, in an execution window, the processing procedure based on the first indication information.

The first reference signal includes at least one reference signal, and the execution window includes a reference signal cycle of the at least one reference signal, or the execution window includes a measurement cycle of the at least one reference signal, or the execution window is determined based on implementation of a terminal device.

It should be understood that the execution window involved in the embodiment of the present disclosure can be at least one of D, E and F as shown in FIG. 2. That is, it can be any one or more of D, E and F, and it can also be the total length formed by D, E and F, for which the embodiment of the present disclosure does not make specific limitations.

In addition, it should be noted that in the embodiment of the present disclosure, the reference signal cycle of the at least one reference signal can be understood as the cycle of the at least one reference signal itself. For example, for SSB, the reference signal cycle can be understood as the SSB cycle. The measurement cycle of the at least one reference signal can be understood as the measurement cycle for measuring the at least one reference signal. For example, the measurement cycle for SSB can be understood as the cycle of SMTC measurement window. The SMTC measurement window can also be called the duration of the SMTC. The terminal device needs to measure the reference signal based on the measurement cycle to avoid unnecessary measurement and reduce the power consumption of the terminal device. Taking SSB as an example, SSB can be measured based on the cycle of SMTC measurement window. The terminal device detects and measures the SSB according to the SMTC measurement window, and then reports a measurement result to the network device or makes a decision on cell selection and reselection according to the measurement result.

In addition, the execution window including the reference signal cycle of the at least one reference signal, or the execution window including the measurement cycle of the at least one reference signal, is intended to illustrate that the execution window can include resources for a certain number of reference signals or resources for measuring a certain number of reference signals. Taking the execution window including the SSB cycle of the SSB as an example, it can be understood as the execution window including SSB transmission resources for the SSB or SMTC measurement window resources used to measure the SSB. Moreover, the embodiment of the present disclosure does not limit the specific number of cycles included in the execution window.

In some embodiments of tthe present disclosure, the at least one reference signal is Synchronous Signal/physical broadcast channel Block (SSB), and the execution window includes X SSB cycles or X SSB measurement cycles, where X is a positive integer; or the at least one reference signal is tracking reference signal (TRS), and the execution window includes Y TRS cycles or Y TRS measurement cycles, where Y is a positive integer; or the first reference signal is TRS and SSB, and the execution window includes Z1 SSB cycles and Z2 TRS cycles, or the execution window includes Z1 SSB measurement cycles and Z2 TRS measurement cycles, where Z1 and Z2 are positive integers; or the first reference signal is TRS or SSB, and the execution window includes a longest one of Z1 SSB cycles and Z2 TRS cycles, or the execution window includes a longest one of Z1 SSB measurement cycles and Z2 TRS measurement cycles; or the first reference signal is a default reference signal, and the execution window is determined based on implementation of the terminal device.

Taking the reference signal cycle of the execution window including at least one reference signal as an example, at S220 the processing procedure can be executed in any one of the following ways. Mode 1: the terminal device executes the processing procedure, according to the reference signal in the configuration information indicated after triggering. If the reference signal is configured as SSB, the processing procedure needs to be completed within X SSB cycles. Mode 2: the terminal device executes the processing procedure, according to the reference signal in the configuration information indicated after triggering. If the reference signal is configured as TRS, the processing procedure needs to be completed after Y TRS cycles. Mode 3: the terminal device executes the processing procedure, according to the reference signal in the configuration information indicated after triggering. If the reference signal is configured as TRS and SSB, the processing procedure needs to be completed after Z1 SSB cycles and Z2 TRS cycles. Mode 4: the terminal device executes the processing procedure, according to the reference signal in the configuration information indicated after triggering. If the reference signal is configured as TRS or SSB, the processing procedure needs to be completed within no longer than the maximum of Z1 SSB cycles or Z2 TRS cycles. Mode 5: the terminal device executes the processing procedure, according to the reference signal in the configuration information indicated after triggering. If the reference signal is configured as default, then UE completes the processing procedure based on its implementation, the required time window being compliant with the existing protocol. The configuration information indicated after triggering (that is, the first indication information) can be explicit or implicit.

In some embodiments of the present disclosure, the first indication information is further used to indicate a number of reference signal cycles or measurement cycles of each of the at least one reference signal.

In some embodiments of the present disclosure, the execution window includes at least one longest cycle. The longest cycle is a longest cycle of all reference signals the same as the first reference signal which are configured for serving cells of the terminal device, or the longest cycle is a longest cycle of all reference signals the same as the first reference signal which are configured for a group of cells to be activated of the terminal device.

For example, the length of the execution window includes at least one of: X, Y, Z1 or Z2 reference signal cycles or measurement cycles. The reference signal cycle or measurement cycle is taken as the longest cycle in all service cells configured with the first reference signal. For example, the length of the execution window includes at least one of: X, Y, Z1 or Z2 reference signal cycles or measurement cycles. The reference signal cycle or measurement cycle is the longest cycle in the current group of cells to be activated.

In some embodiments of the present disclosure, the SCell is a cell within a frequency range FR2, and a length of the execution window is N times the number of reference signal cycles or measurement cycles of the at least one reference signal, where N represents a beam scanning scaling factor.

It should be noted that the embodiment of the present disclosure does not specifically limit the number of reference signal cycles of the at least one reference signal, the number of measurement cycles of the at least one reference signal, and the value of N. As an example, the number of reference signal cycles of the at least one reference signal can be 2, 4 or 8, and the like, and the value of N can be 8, and the like.

As the processing procedure is executed by at least one reference signal, the determination method of interruption duration also needs to be updated. The following describes how to determine the interruption duration.

In some embodiments of the present disclosure, the method 200 may also include: determining an interruption duration of the processing procedure based on a measurement window of a reference signal required by the processing procedure, for intra-band Dual Connectivity or Carrier Aggregation (DC/CA).

In other words, for intra-band Dual Connectivity or Carrier Aggregation (DC/CA), the duration in the processing procedure is related to the measurement window of the reference signal required by the processing procedure (that is, the measurement window of the first reference signal).

In some embodiments of the present disclosure, the method 200 may also include: determining an interruption duration of the processing procedure based on a measurement window of a reference signal required by the processing procedure, for inter-band Dual Connectivity or Carrier Aggregation (DC/CA).

In other words, for inter-band Dual Connectivity or Carrier Aggregation (DC/CA), the duration in the processing procedure is related to the measurement window of the reference signal required by the processing procedure (that is, the measurement window of the first reference signal).

Optionally, the interruption duration is determined based on a duration of an SSB Measurement Timing Configuration (SMTC), $T_{SMTC\_suration}$, when the first reference signal is SSB; and/or the interruption duration is determined based on a duration of a measurement window of a TRS, $T_{TRS\ measurement\ windows\_duration}$, when the first reference signal is TRS.

In other words, the measurement window of SSB can be the duration of SMTC, $T_{SMTC\_duration}$; and the measurement window of TRS can be the duration of the TRS measurement window, $T_{TRS\ measurement\ windows\_duration}$. Of course, in other embodiments of the present disclosure, similar to SMTC, TRS can have TRS measurement timing configuration for TRS measurement. In this case, the duration of TRS measurement window $T_{TRS\ measurement\ windows\_duration}$ can also be called the duration of TRS measurement timing configuration.

For example, taking the first reference signal being SSB as an example, the interruption duration can be determined based on the following Table 2.

Table 2

| $\mu$ | NR Slot length (ms) | Interruption length (slots) |
|---|---|---|
| 0 | 1 | $1 + T_{SMTC\_duration} * N_{slot}^{subframe,\mu}$ |
| 1 | 0.5 | $1 + T_{SMTC\_duration} * N_{slot}^{subframe,\mu}$ |
| 2 | 0.25 | $2 + T_{SMTC\_duration} * N_{slot}^{subframe,\mu}$ |
| 3 | 0.125 | $4 + T_{SMTC\_duration} * N_{slot}^{subframe,\mu}$ |
| Note 1: $T_{SMTC\ duration}$ measured in subframes is: | | |

(continued)

| $\mu$ | NR Slot length (ms) | Interruption length (slots) |
|---|---|---|
| the longest SS/PBCH block measurement timing configuration (SMTC) duration among all active serving cells and an SCell being activated, when the SCell is activated; the longest SMTC duration among all active serving cells in the same band when one SCell is deactivated. Note 2: $N_{slot}^{subframe,\mu}$ is as defined in TS 38.211 [6]) . | | |

Here, table 2 shows the interruption duration for SCell activation/deactivation for intra-band DC/CA, where $\mu$ represents the subcarrier interval. As shown in table 2, the interruption duration is determined based on $T_{SMTC\_duration}$.

Optionally, the interruption duration is determined, based on a maximum one of the measurement window of SSB and the measurement window of TRS.

Optionally, the interruption duration is determined based on the measurement window of a predetermined length, when the first reference signal is TRS and no measurement window is defined for TRS.

In some embodiments of the present disclosure, the method 200 may also include: determining an interruption duration of the processing procedure based on a duration of an SSB Measurement Timing Configuration (SMTC), $T_{SMTC\_duration}$, for intra-band Dual Connectivity or Carrier Aggregation (DC/CA).

In other words, the duration in the processing procedure is not related to the type of reference signal required by the processing procedure. That is, no matter what kind of reference signal, the interruption duration of the processing procedure can be determined based on the duration of the SMTC, $T_{SMTC\_duration}$.

For example, the duration in the processing procedure is not related to the type of reference signal required by the processing procedure. That is, no matter what kind of reference signal, the interruption duration can be determined based on the above table 2.

Optionally, the duration of the SMTC $T_{SMTC\_duration}$ is: a longest one of SMTC durations in all active serving cells and an SCell being activated, when the SCell is activated; or a longest one of SMTC durations in all active serving cells in a same frequency band, when the SCell is deactivated.

In some embodiments of the present disclosure, the method 200 may also include: determining, for inter-band Dual Connectivity or Carrier Aggregation (DC/CA), an interruption duration of the processing procedure based on synchrony or asynchrony of the inter-band DC/CA.

In other words, the duration in the processing procedure is not related to the type of reference signal required by the processing procedure. That is, no matter what kind of reference signal, the interruption duration of the processing procedure can be determined based on the synchronous or asynchronous of the inter-band DC/CA.

For example, the interruption duration can be determined based on the following Table 3:

Table 3

| $\mu$ | NR Slot length(ms) of victim cell | Interruption length (slots) | | Async |
|---|---|---|---|---|
| | | Sync | | |
| 0 | 1 | 1 | | 2 |
| 1 | 0.5 | 1 | | 2 |
| 2 | 0.25 | Both aggressor cell and victim cell are on FR2 | 2 | 3 |
| | | Either aggressor cell or victim cell is on FR1 | 3 | |
| 3 | 0.125 | Aggressor cell is on FR2 | 4 | 5 |
| | | Aggressor cell is on FR1 | 5 | |

Here, table 3 shows the interruption duration for SCell activation/deactivation for inter-band DC/CA, where $\mu$ represents the subcarrier interval. As shown in table 3, the interruption duration is related to the subcarrier interval, the NR timeslot length of the victim cell, and sync/async.

It should be noted that for intra-band Dual Connectivity or Carrier Aggregation (DC/CA) and for inter-band Dual Connectivity or Carrier Aggregation (DC/CA), the determination method of interruption duration can be the same or different, for which the embodiment of the present disclosure does not make specific limiations. For example, for intra-band Dual Connectivity or Carrier Aggregation (DC/CA), the interruption duration of the processing procedure can be determined based on the measurement window of the reference signal required by the processing procedure. For inter-band Dual Connectivity or Carrier Aggregation (DC/CA), other methods can be used to determine the interruption duration in the processing procedure.

For example, as a specific example, the interruption duration can be determined in any one of the following ways.

Mode 1: The determination method of interruption duration for inter-band DC/CA remains unchanged, that is, the interruption duration is determined according to table 8.2.4.2.2-1. The interruption duration for intra-band DC/CA is determined based on the measurement window of the first reference signal. For example, the interruption duration is determined based on the duration of the SMTC $T_{SMTC\_duration}$, when the first reference signal is SSB; and/or, the interruption duration is determined based on the duration of the measurement window of the TRS $T_{TRS\ measurement\ windows\_duration}$, when the first reference signal is TRS. Both SSB and TRS have measurement timing configuration (i.e. measurement window), and the largest of the measurement windows corresponding to SSB and TRS is taken as a unit. If no measurement window is defined for the TRS in the above case, a 5ms measurement window is taken.

Mode 2: The interruption duration for inter-band DC/CA remains unchanged, that is, the interruption duration is determined according to table 8.2.4.2.2-1. The interruption requirements of intra-band DC/CA are still determined in accordance with $T_{SMTC\_duration}$, that is, the interruption duration is determined according to table 8.2.4.2.2-2.

In some embodiments of the present disclosure, the method 200 may further include: transmitting capability information used to indicate a capability used for a terminal device to support the processing procedure.

Optionally, the capability information is used to indicate the terminal device only supports a capability of fast processing based on tracking reference signal (TRS), or the capability information is used to indicate the terminal device supports a capability of fast processing based on TRS and Synchronous Signal/physical broadcast channel Block (SSB), or the capability information is used to indicate the terminal device supports a capability of fast processing and the interruption duration is determined based on a TRS cycle, or the capability information is used to indicate the terminal device supports a capability of fast processing and the interruption duration is determined based on implementation of the terminal device.

By introducing the capability information of different terminal devices to support different radio resource management (RRM) requirements, flexibility of network scheduling can be ensured.

In other words, the capability information of the terminal device can be defined in any one of the following ways.

Mode 1: terminal device capability 1 is introduced that only supports TRS-based fast SCell activation. Only if the terminal device reports that it supports this capability, the network will allow the terminal device to be configured with fast activation, and implement it according to the requirements of fast activation. Here, the processing duration and interruption duration are both determined by the TRS cycle.

Mode 2: the terminal device capability 2 is introduced that supports fast SCell activation based on a hybrid of TRS and SSB. Only if the terminal device reports that it supports this capability, the network will allow the terminal device to be configured with fast activation, and implement it according to the requirements of fast activation. The processing duration and interruption duration are determined jointly by SSB and TRS.

Mode 3: terminal device capability 3 is introduced that supports fast SCell activation, without specifying what reference signal to use. Only if the terminal device reports that it supports this capability, the network will allow the terminal device to be configured with fast activation, and implement it according to the requirements of fast activation. The processing duration and interruption duration are both determined by the TRS cycle.

Mode 4: terminal device capability 4 is introduced that supports fast SCell activation, without specifying what reference signal to use. Only if the terminal device reports that it supports this capability, the network will allow the terminal device to be configured with fast activation, and implement it according to the requirements of fast activation. The processing duration and interruption duration only need to meet the existing requirements, but are based on the implementation of terminal device.

It should be noted that the terminal device which does not support the terminal device capacity 1/2/3/4 only needs to meet the existing requirements, and the network does not expect to schedule the terminal device earlier. For terminal device supporting capacity 1/2/3/4, the network will expect to fast-activate the corresponding SCell earlier and schedule the terminal device in the SCell.

In some embodiments of the present disclosure, the first indication information is further used to indicate capability information, and the capability information is used to indicate a capability needed to be supported by the terminal device when the terminal device uses the first reference signal in the processing procedure.

In other words, while indicating the first reference signal, the first indication information can further indicate the capability that the terminal device needs to support when the processing procedure is performed using the first reference signal.

Optionally, the first indication information indicates the capability information via the first reference signal.

Optionally, the capability information is used to indicate the capability needed to be supported by the terminal device when the terminal device uses Tracking Reference Signal (TRS) in the processing procedure, or the capability information is used to indicate the capability needed to be supported by the terminal device when the terminal device uses TRS and Synchronization Signal/physical broadcast channel Block (SSB) in the processing procedure, or the capability information is used to indicate the terminal device needs to support a capability of fast processing and the interruption duration is determined based on a TRS cycle, or the capability information is used to indicate the terminal device needs to support a capability of fast processing and the interruption duration is determined based on implementation of the terminal device.

The embodiments of the present disclosure are described in detail above in combination with the accompanying drawings. However, the present disclosure is not limited to the specific details of the above embodiments. Within the scope of the technical concept of the present disclosure, a variety of simple variants of the technical solution of the present disclosure can be made. These simple variants are within the scope of protection of the present disclosure. For example, the specific technical features described in the above specific embodiments can be combined in any suitable way without contradiction. In order to avoid unnecessary duplication, various possible combination methods will not be described in the present disclosure. For another example, the various embodiments of the present disclosure can also be combined arbitrarily, as long as they do not violate the idea of the present disclosure, they should also be regarded as the contents disclosed in the present disclosure.

It should also be understood that in the various method embodiments of the present disclosure, the value of the sequence number of the above processes does not imply the sequence of execution. The execution sequence of each process should be determined by its function and internal logic, and should not constitute any restriction on the implementation process of the embodiments of the present disclosure. In addition, in the embodiment of the present disclosure, the term "and/or" is only an association relationship describing the associated objects, indicating that there can be three relationships. Specifically, A and/or B can indicate that there are three cases: A alone, A and B together, and B alone. In addition, the character "/" in this disclosure generally indicates that the associated objects are in an "or" relationship.

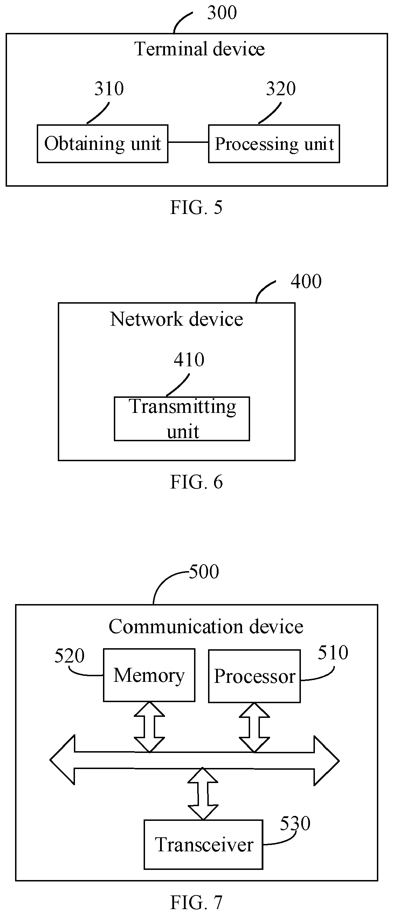

The method embodiments of the present disclosure are described in detail above, and the device embodiments of the present disclosure are described in detail below in combination with FIG. 5 to 8.

FIG. 5 is a schematic block diagram showing a terminal device 300 according to an embodiment of the present disclosure.

As shown in FIG. 5, the terminal device 300 may include: an obtaining unit 310 and a processing unit 320.

The obtaining unit 310 is configured to obtain first indication information. The first indication information is used to indicate a first reference signal used in a processing procedure for an SCell, the processing procedure including at least one of activation, deactivation, addition or deletion.

The processing unit 320 is configured to execute the processing procedure based on the first indication information.

In some embodiments of the present disclosure, the first indication information is used to instruct a terminal device to trigger the processing procedure for the SCell and is used to indicate the first reference signal used in the processing procedure.

In some embodiments of the present disclosure, the first indication information is carried in at least one of: Media Access Control Control Element (MAC CE), Downlink Control Information (DCI) or second indication information used to instruct a terminal device to switch Bandwidth Part (BWP).

In some embodiments of the present disclosure, the second indication information is carried in at least one of: Downlink Control Information (DCI), timer configuration information, or Radio Resource Control (RRC) signaling.

In some embodiments of the present disclosure, the first reference signal is used in at least one of: adjusting Automatic Gain Control (AGC), cell search or time-frequency synchronization.

In some embodiments of the present disclosure, the first reference signal includes a pilot signal.

In some embodiments of the present disclosure, the pilot signal includes at least one of: Synchronous Signal/physical broadcast channel Block (SSB), Channel State Information Reference Signal (CSI-RS) or Tracking Reference Signal (TRS).

In some embodiments of the present disclosure, the processing unit 320 is specifically configured to: execute, in an execution window, the processing procedure based on the first indication information.

The first reference signal includes at least one reference signal, and the execution window includes a reference signal cycle of the at least one reference signal, or the execution window includes a measurement cycle of the at least one reference signal, or the execution window is determined based on implementation of a terminal device.

In some embodiments of the present disclosure, the at least one reference signal is Synchronous Signal/physical broadcast channel Block (SSB), and the execution window includes X SSB cycles or X SSB measurement cycles, where X is a positive integer; or the at least one reference signal is tracking reference signal (TRS), and the execution window includes Y TRS cycles or Y TRS measurement cycles, where Y is a positive integer; or the first reference signal is TRS and SSB, and the execution window includes Z1 SSB cycles and Z2 TRS cycles, or the execution window includes Z1 SSB measurement cycles and Z2 TRS measurement cycles, where Z1 and Z2 are positive integers; or the first reference signal is TRS or SSB, and the execution window includes a longest one of Z1 SSB cycles and Z2 TRS cycles, or the execution window includes a longest one of Z1 SSB measurement cycles and Z2 TRS measurement cycles; or the first reference signal is a default reference signal, and the execution window is determined based on implementation of the terminal device.

In some embodiments of the present disclosure, the first indication information is further used to indicate a number of reference signal cycles or measurement cycles of each of the at least one reference signal.

In some embodiments of the present disclosure, the execution window includes at least one longest cycle. The longest cycle is a longest cycle of all reference signals the same as the first reference signal which are configured for serving cells of the terminal device, or the longest cycle is a longest cycle of all reference signals the same as the first reference signal which are configured for a group of cells to be activated of the terminal device.

In some embodiments of the present disclosure, the SCell is a cell within a frequency range FR2, and a length of the execution window is N times the number of reference signal cycles or measurement cycles of the at least one reference signal, where N represents a beam scanning scaling factor.

In some embodiments of the present disclosure, the processing unit 320 is also configured to: determine an interruption duration of the processing procedure based on a measurement window of a reference signal required by the processing procedure, for intra-band Dual Connectivity or Carrier Aggregation (DC/CA).

In some embodiments of the present disclosure, the processing unit 320 is also configured to: determine an interruption duration of the processing procedure based on a measurement window of a reference signal required by the processing procedure, for inter-band Dual Connectivity or Carrier Aggregation (DC/CA).

In some embodiments of the present disclosure, the processing unit 320 is specifically configured to: determine the interruption duration based on a duration of an SSB Measurement Timing Configuration (SMTC), $T_{SMTC\_duration}$ , when the first reference signal is SSB; and/or determine the interruption duration based on a duration of a measurement window of a TRS, $T_{TRS\ measurement\ windows\_duration}$ , when the first reference signal is TRS.

In some embodiments of the present disclosure, the processing unit 320 is also configured to: determine the interruption duration based on a maximum one of a measurement window of SSB and a measurement window of TRS.

In some embodiments of the present disclosure, the processing unit 320 is also configured to: determine the interruption duration based on a measurement window of a predetermined length, when the first reference signal is TRS and no measurement window is defined for TRS.

In some embodiments of the present disclosure, the processing unit 320 is also configured to: determine an interruption duration of the processing procedure based on a duration of an SSB Measurement Timing Configuration (SMTC), $T_{SMTC\_duration}$, for intra-band Dual Connectivity or Carrier Aggregation (DC/CA).

In some embodiments of present disclosure, the duration of the SMTC $T_{SMTC\_duration}$ is: a longest one of SMTC durations in all active serving cells and an SCell being activated, when the SCell is activated; or a longest one of SMTC durations in all active serving cells in a same frequency band, when the SCell is deactivated.

In some embodiments of the present disclosure, the processing unit 320 is also configured to: determine, for inter-band Dual Connectivity or Carrier Aggregation (DC/CA), an interruption duration of the processing procedure based on synchrony or asynchrony of the inter-band DC/CA.

In some embodiments of the present disclosure, the acquisition unit 310 is also configured to: transmit capability information used to indicate a capability used for a terminal device to support the processing procedure.

In some embodiments of the present disclosure, the capability information is used to indicate the terminal device only supports a capability of fast processing based on tracking reference signal (TRS), or the capability information is used to indicate the terminal device supports a capability of fast processing based on TRS and Synchronous Signal/physical broadcast channel Block (SSB), or the capability information is used to indicate the terminal device supports a capability of fast processing and an interruption duration is determined based on a TRS cycle, or the capability information is used to indicate the terminal device supports a capability of fast processing and an interruption duration is determined based on implementation of the terminal device.

In some embodiments of the present disclosure, the first indication information is further used to indicate capability information, and the capability information is used to indicate a capability needed to be supported by the terminal device when the terminal device uses the first reference signal in the processing procedure.

In some embodiments of the present disclosure, the first indication information indicates the capability information via the first reference signal.

In some embodiments of the present disclosure, the capability information is used to indicate the capability needed to be supported by the terminal device when the terminal device uses Tracking Reference Signal (TRS) in the processing procedure, or the capability information is used to indicate the capability needed to be supported by the terminal device when the terminal device uses TRS and Synchronization Signal/physical broadcast channel Block (SSB) in the processing procedure, or the capability information is used to indicate the terminal device needs to support a capability of fast processing and the interruption duration is determined based on a TRS cycle, or the capability information is used to indicate the terminal device needs to support a capability of fast processing and the interruption duration is determined based on implementation of the terminal device.

FIG. 6 is a schematic block diagram showing a network device 400 according to an embodiment of the present disclosure.

As shown in FIG. 6, the network device 400 may include a transmitting unit 410.

The transmitting unit 410 is configured to transmit first indication information. The first indication information is used to indicate a first reference signal used in a processing procedure for an SCell, the processing procedure including at least one of activation, deactivation, addition or deletion.

In some embodiments of the present disclosure, the first indication information is used to instruct a terminal device to trigger the processing procedure for the SCell and configured to indicate the first reference signal used in the processing procedure.

In some embodiments of the present disclosure, the first indication information is carried in at least one of: Media Access Control Control Element (MAC CE), Downlink Control Information (DCI) or second indication information used to instruct a terminal device to switch Bandwidth Part (BWP).

In some embodiments of the present disclosure, the second indication information is carried in at least one of: Downlink Control Information (DCI), timer configuration information, or Radio Resource Control (RRC) signaling.

In some embodiments of the present disclosure, the first reference signal is used for at least one of: adjusting Automatic Gain Control (AGC), cell search or time-frequency synchronization.

In some embodiments of the present disclosure, the first reference signal includes a pilot signal.

In some embodiments of the present disclosure, the pilot signal includes at least one of: Synchronous Signal/physical broadcast channel Block (SSB), Channel State Information ReferenceSignal (CSI-RS) or Tracking Reference Signal (TRS).

In some embodiments of the present disclosure, the first reference signal includes at least one reference signal, and the execution window for executing the processing procedure includes a reference signal cycle of the at least one reference signal, or the execution window includes a measurement cycle of the at least one reference signal, or the execution window is determined based on implementation of a terminal device.

In some embodiments of the present disclosure, the at least one reference signal is Synchronous Signal/physical broadcast channel Block (SSB), the execution window includes X SSB cycles or X SSB measurement cycles, where X is a positive integer; or the at least one reference signal is tracking reference signal (TRS), the execution window includes Y TRS cycles or Y TRS measurement cycles, where Y is a positive integer; or the first reference signal is TRS and SSB, the execution window includes Z1 SSB cycles and Z2 TRS cycles, or the execution window includes Z1 SSB measurement cycles and Z2 TRS measurement cycles, where Z1 and Z2 are positive integers; or the first reference signal is TRS or SSB, and the execution window includes a longest one of Z1 SSB cycles and Z2 TRS cycles, or the execution window includes a longest one of Z1 SSB measurement cycles and Z2 TRS measurement cycles; or the first reference signal is a default reference signal, and the execution window is determined based on implementation of the terminal device.

In some embodiments of the present disclosure, the first indication information is further configured to indicate a number of reference signal cycles or measurement cycles of each of the at least one reference signal.

In some embodiments of the present disclosure, the execution window includes at least one longest cycle. The longest cycle is a longest cycle of all reference signals the same as the first reference signal which are configured for serving cells of the terminal device, or the longest cycle is a longest cycle of all reference signals the same as the first reference signal which are configured for a group of cells to be activated of the terminal device.

In some embodiments of the present disclosure, the SCell is a cell within a frequency range FR2, and a length of the execution window is N times the number of reference signal cycles or measurement cycles of the at least one reference signal, where N represents a beam scanning scaling factor.

In some embodiments of the present disclosure, the transmission unit 410 is also configured to: determine an interruption duration of the processing procedure based on a measurement window of the reference signal required by the processing procedure, for intra-band Dual Connectivity or Carrier Aggregation (DC/CA).

In some embodiments of the present disclosure, the transmission unit 410 is also configured to: determine an interruption duration of the processing procedure based on a measurement window of a reference signal required by the processing procedure, for inter-band Dual Connectivity or Carrier Aggregation (DC/CA).

In some embodiments of the present disclosure, the transmission unit 410 is specifically configured to: determine the interruption duration based on a duration of an SSB Measurement Timing Configuration (SMTC), $T_{SMTC\_duration}$, when the first reference signal is SSB; and/or determine the interruption duration based on a duration of a measurement window of a TRS, $T_{TRS\ measurement\ windows\_duration}$, when the first reference signal is TRS.

In some embodiments of the present disclosure, the transmission unit 410 is specifically configured to: determine the interruption duration based on a maximum one of a measurement window of SSB and a measurement window of TRS.

In some embodiments of the present disclosure, the transmission unit 410 is specifically configured to: determine the interruption duration based on a measurement window of a predetermined length, when the first reference signal is TRS and no measurement window is defined for TRS.

In some embodiments of the present disclosure, the transmission unit 410 is also configured to: determine an interruption duration of processing procedure based on a duration of an SSB Measurement Timing Configuration (SMTC), $T_{SMTC\_duration}$, for intra-band Dual Connectivity or Carrier Aggregation (DC/CA).

In some embodiments of this disclosure, the duration of the SMTC $T_{SMTC\_duration}$ is: a longest one of SMTC durations in all active serving cells and an SCell being activated, when the SCell is activated; or a longest one of SMTC durations in all active serving cells in a same frequency band, when the SCell is deactivated.

In some embodiments of the present disclosure, the transmission unit 410 is also configured to: determine, for inter-band Dual Connectivity or Carrier Aggregation (DC/CA), an interruption duration of the processing procedure based on synchrony or asynchrony of the inter-band DC/CA.

In some embodiments of the present disclosure, the transmission unit 410 is also configured to: receive capability information used to indicate a capability used for a terminal device to support the processing procedure.

In some embodiments of the present disclosure, the capability information is used to indicate the terminal device only supports a capability of fast processing based on tracking reference signal (TRS), or the capability information is used to indicate the terminal device supports a capability of fast processing based on TRS and Synchronous Signal/physical broadcast channel Block (SSB), or the capability information is used to indicate the terminal device supports a capability of fast processing and an interruption duration is determined based on a TRS cycle, or the capability information is used to indicate the terminal device supports a capability of fast processing and an interruption duration is determined based on implementation of the terminal device.

In some embodiments of the present disclosure, the first indication information is further used to indicate capability information, and the capability information is used to indicate a capability needed to be supported by the terminal device when the terminal device uses the first reference signal in the processing procedure.

In some embodiments of the present disclosure, the first indication information indicates the capability information via the first reference signal.

In some embodiments of the present disclosure, the capability information is used to indicate the capability needed to be supported by the terminal device when the terminal device uses Tracking Reference Signal (TRS) in the processing procedure, or the capability information is used to indicate the capability needed to be supported by the terminal device when the terminal device uses TRS and Synchronization Signal/physical broadcast channel Block (SSB) in the processing procedure, or the capability information is used to indicate the terminal device needs to support a capability of fast processing and the interruption duration is determined based on a TRS cycle, or the capability information is used to indicate the terminal device needs to support a capability of fast processing and the interruption duration is determined based on implementation of the terminal device.

It should be understood that device embodiments and method embodiments can correspond to each other, and for similar description reference can be made to method embodiments. Specifically, the terminal device 300 shown in FIG. 5 can correspond to the corresponding entity in the method 200 of implementing the embodiment of the present disclosure, and the foregoing and other operations and/or functions of each unit in the terminal device 300 are respectively intended to implement the corresponding processes in the method in FIG. 4. Similarly, the network device 400 shown in FIG. 6 can correspond to the corresponding entity in the method 200 of implementing the embodiment of the present disclosure, and the foregoing and other operations and/or functions of each unit in the network device 400 are respectively intended to implement the corresponding processes in the method in FIG. 4. These will not be repeated here for simplicity.

The communication device of the embodiment of the present disclosure is described above from the perspective of functional modules in combination with the accompanying drawings. It should be understood that these functional modules can be implemented in the form of hardware, instructions in the form of software, and combination of hardware and software modules. Specifically, each step of the method embodiment in the embodiment of the present disclosure can be completed by the integrated logic circuit of the hardware in the processor and/or the instructions in the form of software. The steps of the method disclosed in the embodiment of the present disclosure can be directly reflected in the execution of the hardware decoding processor, or the combination of the hardware and software modules in the decoding processor. Optionally, the software module can be located in random access memory, flash memory, read-only memory, programmable read-only memory, electrically erasable programmable memory, registers and other mature storage media in the art. The storage medium is located in the memory. The processor reads the information in the memory and completes the steps in the above method embodiment in combination with its hardware.

For example, the processing unit and the communication unit mentioned above may be implemented by a processor and a transceiver respectively.

FIG. 7 a schematic block diagram showing a communication device 500 according to an embodiment of the present disclosure.

As shown in FIG. 7, the communication device 500 may include a processor 510.

Here, the processor 510 can invoke and execute a computer program from a memory, to perform the method in the embodiment of the present disclosure.

Continuing to refer to FIG. 7, the communication device 500 may also include a memory 520.

The memory 520 can be used to store indication information, and can also be used to store codes, instructions, etc. Here, the processor 510 can invoke and execute a computer program from a memory, to perform the method in the embodiment of the present disclosure. The memory 520 can be a separate device independent of the processor 510, or can be integrated in the processor 510.

Continuing to refer to FIG. 7. the communication device 500 may also include a transceiver 530.

Here, the processor 510 can control the transceiver 530 to communicate with other devices. Specifically, it can transmit information or data to other devices or receive information or data transmitted by other devices. The transceiver 530 may include a transmitter and a receiver. The transceiver 530 may further include antennas, and the number of antennas may be one or more.

It should be understood that each component in the communication device 500 is connected through a bus system, which includes a power bus, a control bus and a status signal bus in addition to a data bus.

It should also be understood that the communication device 500 can be the terminal device of the embodiment of the present disclosure, and the communication device 500 can implement the corresponding processes implemented by the terminal device in the various methods of the embodiment of the present disclosure. That is to say, the communication device 500 of the embodiment of the present disclosure can correspond to the terminal device 300 in the embodiment of the present disclosure, and can correspond to the corresponding entity in the method 200 according to the embodiment of the present disclosure. For simplicity, it will not be repeated here. Similarly, the communication device 500 can be the network device of the embodiment of the present disclosure, and the communication device 500 can implement the corresponding processes implemented by the network device in the various methods of the embodiment of the present disclosure. That is to say, the communication device 500 of the embodiment of the present disclosure can correspond to the network device 400 of the embodiment of the present disclosure, and can correspond to the corresponding entity of the method 200 according to the embodiment of the present disclosure. For simplicity, it will not be repeated here.

In addition, the embodiment of the present disclosure also provides a chip.

For example, the chip may be an integrated circuit chip with signal processing capability, which can implement or execute the disclosed methods, steps and logic block diagrams in the embodiment of the present disclosure. The chip can also be called system-level chip, system-on-chip, system-on-chip system or system-on-chip. Optionally, the chip can be applied to various communication devices so that the communication device provided with the chip can implement the disclosed methods, steps and logical block diagrams in the embodiment of the present disclosure.

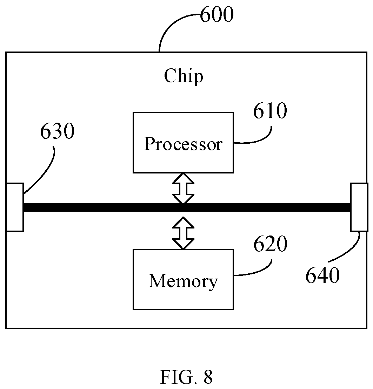

FIG. 8 is a schematic block diagram of a chip 600 according to an embodiment of the present disclosure.

As shown in Figure 8, the chip 600 includes a processor 610.

Here, the processor 610 can invoke and execute a computer program from a memory, to perform the method in the embodiment of the present disclosure.

Continue to refer to FIG. 8, the chip 600 may also include a memory 620.

Here, the processor 610 can invoke and execute a computer program from a memory620, to perform the method in the embodiment of the present disclosure. The memory 620 can be used to store instruction information, and can also be used to store codes, instructions, etc. The memory 620 may be a separate device independent of the processor 610, or may be integrated in the processor 610.

Continuing to refer to FIG. 8, the chip 600 can also include an input interface 630.

Here, the processor 610 can control the input interface 630 to communicate with other devices or chips, and specifically, it can obtain information or data transmitted by other devices or chips.

Continue to refer to FIG. 8, the chip 600 can also include an output interface 640.

The processor 610 can control the output interface 640 to communicate with other devices or chips, specifically, it can output information or data to other devices or chips.

It should be understood that the chip 600 can be applied to the network device in the embodiment of the present disclosure, and the chip can implement the corresponding processes implemented by the network device in the various methods of the embodiment of the present disclosure, and can also implement the corresponding processes implemented by the terminal device in the various methods of the embodiment of the present disclosure. For simplicity, it will not be repeated here.

It should also be understood that each component in the chip 600 is connected by a bus system, which includes power bus, control bus and status signal bus in addition to data bus.

The processors mentioned above may include but are not limited to: general purpose processor, Digital Signal Processor (DSP), Application Specific Integrated Circuit (ASIC), Field Programmable Gate Array (FPGA) or other programmable logic devices, discrete gate or transistor logic devices, discrete hardware components, etc.

The processor can be used to implement or execute the disclosed methods, steps and logical block diagrams in the embodiment of the present disclosure. The steps of the method disclosed in combination with the embodiment of the present disclosure can be directly reflected in the execution and completion of the hardware decoding processor or the combination of hardware and software modules in the decoding processor. The software module can be located in random access memory, flash memory, read-only memory, programmable read-only memory or rewritable programmable memory, registers and other mature storage media in the field. The storage medium is located in the memory, and the processor reads the information in the memory, and completes the steps of the above method in combination with its hardware.

The memory mentioned above includes but is not limited to: volatile memory and/or non-volatile memory. Non-volatile memory can be Read-Only Memory (ROM), Programmable ROM (PROM), Erasable PROM (EPROM), Electrically Erasable EPROM (EEPROM) or flash memory. Volatile memory can be random access memory (RAM), which is used as external cache. By way of example, but not limitation, many forms of RAM are available, such as static random access memory (SRAM), dynamic random access memory (DRAM), synchronous dynamic random access memory (SDRAM), double data rate SDRAM (DDR SDRAM) Enhanced synchronous dynamic random access memory (ESDRAM), synchronous link DRAM (SLDRAM) and direct memory bus random access memory (DR RAM).

It should be noted that the memory described herein is intended to include these and any other suitable types of memory.

The embodiment of the present disclosure also provides a computer-readable storage medium for storing computer programs. The computer-readable storage medium stores one or more programs, and the one or more programs include instructions, which can enable the portable electronic device to execute the method of the embodiment shown in method 200 when executed by the portable electronic device including multiple applications. Optionally, the computer-readable storage medium can be applied to the network device in the embodiment of the present disclosure, and the computer program enables the computer to execute the corresponding processes implemented by the network device in the various methods of the embodiment of the present disclosure. For simplicity, it will not be repeated here. Optionally, the computer-readable storage medium can be applied to the mobile terminal/terminal device in the embodiment of the present disclosure, and the computer program enables the computer to execute the corresponding processes implemented by the mobile terminal/terminal device in the various methods of the embodiment of the disclosure. For simplicity, it will not be repeated here.

The embodiment of the present disclosure also provides a computer program product, including a computer program. Optionally, the computer program product can be applied to the network device in the embodiment of the present disclosure, and the computer program enables the computer to perform the corresponding processes implemented by the network device in the various methods of the embodiment of the present disclosure. For simplicity, it will not be repeated here. Optionally, the computer program product can be applied to the mobile terminal/terminal device in the embodiment of the present disclosure, and the computer program enables the computer to execute the corresponding processes implemented by the mobile terminal/terminal device in the various methods of the embodiment of the present disclosure. For simplicity, it will not be repeated here.

The embodiment of the present disclosure also provides a computer program. When the computer program is executed by the computer, the computer can execute the method of the embodiment shown in method 200. Optionally, the computer program can be applied to the network device in the embodiment of the present disclosure. When the computer program is running on the computer, the computer will execute the corresponding processes implemented by the network device in the various methods of the embodiment of the present disclosure. For simplicity, it will not be repeated here. Optionally, the computer program can be applied to the mobile terminal/terminal device in the embodiment of the present disclosure. When the computer program is running on the computer, the computer will execute the corresponding processes implemented by the mobile terminal/terminal device in the various methods of the embodiment of the present disclosure. For simplicity, it will not be repeated here.

In addition, the embodiment of the present disclosure also provides a communication system. The communication system can include the terminal device and network device mentioned above to form the communication system 100 as shown in FIG. 1. For simplicity, it will not be repeated here. It should be noted that the term "system" in this article can also be referred to as "network management architecture" or "network system".

It should also be understood that the terms used in the embodiments of the present disclosure and the appended claims are only for the purpose of describing specific embodiments, not for the purpose of limiting the embodiments of the present disclosure. For example, the "one", "the", "the above" and "the" in the singular form used in the embodiments of the present disclosure and the appended claims are also intended to include the plural form, unless the context clearly indicates other meanings.

It should be noted that those skilled in the art can realize that the units and algorithm steps of each example described in combination with the embodiments disclosed herein can be implemented by electronic hardware, or the combination of computer software and electronic hardware. Whether these functions are implemented in hardware or software depends on the specific application and design constraints of the technical solution. Those skilled can use different methods to achieve the described functions for each specific application, but such implementation should not be considered beyond the scope of the embodiments of the present disclosure. If it is implemented in the form of software functional unit and sold or used as an independent product, it can be stored in a computer-readable storage medium. Based on this understanding, the technical solution of the embodiment of the present disclosure can be embodied in the form of software products, which are stored in a storage medium. It includes several instructions to enable a computer device (which can be a personal computer, a server, or a network device, etc.) to perform all or part of the steps of the method described in the embodiment of the present disclosure. The aforementioned storage media include: USB disk, removable hard disk, read-only memory, random access memory, magnetic disk or optical disk and other media that can store program code.

In several embodiments provided by the present disclosure, it should be understood that the disclosed system, device and method can be implemented by other means. For example, the division of units or modules or components in the device embodiments described above is only a logical function division. There can be other division methods in actual implementation. For example, multiple units or modules or components can be combined or integrated into another system, or some units or modules or components can be ignored or not implemented. For another example, the units/modules/components described above as separate/display components can be or can not be physically separated, that is, they can be located in one place, or they can be distributed to multiple network units. Some or all of the units/modules/components can be selected according to the actual needs to achieve the purpose of the embodiment of the present disclosure. Finally, it should be noted that the mutual coupling or direct coupling or communication connection shown or discussed above can be indirect coupling or communication connection through some interfaces, devices or units, and can be electrical, mechanical or other forms.

The above content is only the specific implementation of the embodiment of the present disclosure, but the protection scope of the embodiment of the present disclosure is not limited to this. Any person skilled in the art can easily think of changes or replacements within the technical scope of the present disclosure. The invention is defined by the appended claims.

**Claims**

1. A wireless communication method (200) performed by a terminal device, comprising:

   obtaining (S210) first indication information, wherein the first indication information is used to indicate a first reference signal used in a processing procedure for a secondary cell, the processing procedure comprising activation; and
   executing (S220) the processing procedure based on the first indication information,
   wherein the first indication information is used to instruct the terminal device to trigger the processing procedure for the secondary cell and is used to indicate the first reference signal used in the processing procedure,
   wherein the first indication information is carried in Media Access Control Control Element, MAC CE,
   wherein said executing (S220) the processing procedure based on the first indication information comprises:
   executing, in an execution window, the processing procedure based on the first indication information, the first reference signal comprises at least one reference signal, and **characterized in that**
   the execution window comprises a reference signal cycle of the at least one reference signal, or the execution window comprises a measurement cycle of the at least one reference signal, or the execution window is determined based on implementation of the terminal device;
   wherein the at least one reference signal is Tracking Reference Signal, TRS, and the execution window comprises Y TRS cycles or Y TRS measurement cycles, where Y is a positive integer; or
   the first reference signal is TRS and Synchronous Signal/physical broadcast channel Block, SSB, and the execution window comprises Z1 SSB cycles and Z2 TRS cycles, or the execution window comprises Z1 SSB measurement cycles and Z2 TRS measurement cycles, where Z1 and Z2 are positive integers; or
   the first reference signal is TRS or SSB, and the execution window comprises a longest one of Z1 SSB cycles and Z2 TRS cycles, or the execution window comprises a longest one of Z1 SSB measurement cycles and Z2 TRS measurement cycles.

2. A terminal device (500), comprising:

   a memory (520), configured to store a computer program, and
   a processor (510), configured to invoke and execute the computer program stored in the memory (520) to perform:

   obtaining first indication information, wherein the first indication information is used to indicate a first reference signal used in a processing procedure for a secondary cell, the processing procedure comprising activation; and
   executing the processing procedure based on the first indication information,
   wherein the first indication information is used to instruct the terminal device to trigger the processing procedure for the secondary cell and is used to indicate the first reference signal used in the processing procedure,
   wherein the first indication information is carried in Media Access Control Control Element, MAC CE,

wherein said executing the processing procedure based on the first indication information comprises: executing, in an execution window, the processing procedure based on the first indication information, the first reference signal comprises at least one reference signal, and **characterized in that** the execution window comprises a reference signal cycle of the at least one reference signal, or the execution window comprises a measurement cycle of the at least one reference signal, or the execution window is determined based on implementation of the terminal device;

wherein the at least one reference signal is Tracking Reference Signal, TRS, and the execution window comprises Y TRS cycles or Y TRS measurement cycles, where Y is a positive integer; or

the first reference signal is TRS and Synchronous Signal/physical broadcast channel Block, SSB, and the execution window comprises Z1 SSB cycles and Z2 TRS cycles, or the execution window comprises Z1 SSB measurement cycles and Z2 TRS measurement cycles, where Z1 and Z2 are positive integers; or

the first reference signal is TRS or SSB, and the execution window comprises a longest one of Z1 SSB cycles and Z2 TRS cycles, or the execution window comprises a longest one of Z1 SSB measurement cycles and Z2 TRS measurement cycles.

3. The terminal device (500) according to claim 2, wherein the first reference signal comprises a pilot signal.

4. The terminal device (500) according to claim 3, wherein the pilot signal comprises at least one of: Synchronous Signal/physical broadcast channel Block, SSB, Channel State Information Reference Signal, CSI-RS, or Tracking Reference Signal, TRS.

5. The terminal device (500) according to any one of claims 2 to 4, wherein the method further comprises: determining an interruption duration of the processing procedure based on a measurement window of the first reference signal, for intra-band Dual Connectivity or Carrier Aggregation, DC/CA.

6. The terminal device (500) according to claim 5, wherein said determining the interruption duration of the processing procedure based on the measurement window of the first reference signal comprises:

determining the interruption duration based on a duration of an SSB Measurement Timing Configuration, SMTC, $T_{SMTC\_duration}$, when the first reference signal is SSB; and/or

determining the interruption duration based on a duration of a measurement window of a TRS, $T_{TRS\ measurement\ windows\_duration}$, when the first reference signal is TRS.

7. A wireless communication method (200) performed by a network device, comprising:

transmitting (S210) first indication information, wherein the first indication information is used to indicate a first reference signal used in a processing procedure for a secondary cell, the processing procedure comprising activation,

wherein the first indication information is used to instruct a terminal device to trigger the processing procedure for the secondary cell and configured to indicate the first reference signal used in the processing procedure,

wherein the first indication information is carried in Media Access Control Control Element, MAC CE,

wherein the first reference signal comprises at least one reference signal, and **characterized in that** an execution window for executing the processing procedure comprises a reference signal cycle of the at least one reference signal, or the execution window comprises a measurement cycle of the at least one reference signal, or the execution window is determined based on implementation of the terminal device;

wherein the at least one reference signal is Tracking Reference Signal, TRS, and the execution window comprises Y TRS cycles or Y TRS measurement cycles, where Y is a positive integer; or

the first reference signal is TRS and Synchronous Signal/physical broadcast channel Block, SSB, and the execution window comprises Z1 SSB cycles and Z2 TRS cycles, or the execution window comprises Z1 SSB measurement cycles and Z2 TRS measurement cycles, where Z1 and Z2 are positive integers; or

the first reference signal is TRS or SSB, and the execution window comprises a longest one of Z1 SSB cycles and Z2 TRS cycles, or the execution window comprises a longest one of Z1 SSB measurement cycles and Z2 TRS measurement cycles.

8. A network device (500), comprising:

a memory (520), configured to store a computer program, and

a processor (510), configured to invoke and execute the computer program stored in the memory (520) to perform:

transmitting first indication information, wherein the first indication information is used to indicate a first reference signal used in a processing procedure for a secondary cell, the processing procedure comprising activation,
wherein the first indication information is used to instruct a terminal device to trigger the processing procedure for the secondary cell and configured to indicate the first reference signal used in the processing procedure,
wherein the first indication information is carried in Media Access Control Control Element, MAC CE,
wherein the first reference signal comprises at least one reference signal, and **characterized in that** an execution window for executing the processing procedure comprises a reference signal cycle of the at least one reference signal, or the execution window comprises a measurement cycle of the at least one reference signal, or the execution window is determined based on implementation of the terminal device;
wherein the at least one reference signal is Tracking Reference Signal, TRS, and the execution window comprises Y TRS cycles or Y TRS measurement cycles, where Y is a positive integer; or
the first reference signal is TRS and Synchronous Signal/physical broadcast channel Block, SSB, and the execution window comprises Z1 SSB cycles and Z2 TRS cycles, or the execution window comprises Z1 SSB measurement cycles and Z2 TRS measurement cycles, where Z1 and Z2 are positive integers; or
the first reference signal is TRS or SSB, and the execution window comprises a longest one of Z1 SSB cycles and Z2 TRS cycles, or the execution window comprises a longest one of Z1 SSB measurement cycles and Z2 TRS measurement cycles.

9. The network device (500) according to claim 8, wherein the first reference signal comprises a pilot signal.

10. The network device (500) according to claim 9, wherein the pilot signal comprises at least one of:
Synchronous Signal/physical broadcast channel Block, SSB, Channel State Information Reference Signal, CSI-RS, or Tracking Reference Signal, TRS.

11. The network device (500) according to any one of claims 8 to 10, wherein the method further comprises:
determining an interruption duration of the processing procedure based on a measurement window of the first reference signal, for intra-band Dual Connectivity or Carrier Aggregation, DC/CA.

12. The network device (500) according to claim 11, wherein said determining the interruption duration of the processing procedure based on the measurement window of the first reference signal comprises:

determining the interruption duration based on a duration of an SSB Measurement Timing Configuration, SMTC, $T_{SMTC\_duration}$, when the first reference signal is SSB; and/or
determining the interruption duration based on a duration of a measurement window of a TRS, $T_{TRS\ measurement\ windows\_duration}$, when the first reference signal is TRS.

13. The terminal device (500) according to claim 2, wherein the first indication information is further used to indicate a number of reference signal cycles or measurement cycles of each of the at least one reference signal.

14. The network device (500) according to claim 8, wherein the first indication information is further used to indicate a number of reference signal cycles or measurement cycles of each of the at least one reference signal.

**Patentansprüche**

1. Drahtloskommunikationsverfahren (200), das von einem Endgerät durchgeführt wird, umfassend:

Erhalten (S210) von ersten Angabeinformationen, wobei die ersten Angabeinformationen verwendet werden, um ein erstes Referenzsignal anzugeben, das in einer Verarbeitungsprozedur für eine Sekundärzelle verwendet wird, wobei die Verarbeitungsprozedur Aktivierung umfasst; und
Ausführen (S220) der Verarbeitungsprozedur auf der Grundlage der ersten Angabeinformationen,
wobei die ersten Angabeinformationen verwendet werden, um das Endgerät anzuweisen, die Verarbeitungsprozedur für die Sekundärzelle auszulösen, und verwendet werden, um das in der Verarbeitungsprozedur verwendete erste Referenzsignal anzugeben,
wobei die ersten Angabeinformationen in einem "Media Access Control Control Element", MAC CE, getragen werden, wobei das Ausführen (S220) der Verarbeitungsprozedur auf der Grundlage der ersten Angabeinformationen umfasst:

Ausführen, in einem Ausführungsfenster, der Verarbeitungsprozedur auf der Grundlage der ersten Angabeinformationen, wobei das erste Referenzsignal mindestens ein Referenzsignal umfasst, und **dadurch gekennzeichnet, dass** das Ausführungsfenster einen Referenzsignalzyklus des mindestens einen Referenzsignals umfasst, oder das Ausführungsfenster einen Messzyklus des mindestens einen Referenzsignals umfasst, oder das Ausführungsfenster auf der Grundlage einer Implementierung des Endgeräts bestimmt wird; wobei das mindestens eine Referenzsignal ein "Tracking Reference Signal", TRS, ist und das Ausführungsfenster Y TRS-Zyklen oder Y TRS-Messzyklen umfasst, wobei Y eine positive ganze Zahl ist; oder das erste Referenzsignal TRS und "Synchronous Signal/Physical Broadcast Channel"-Block, SSB, ist und das Ausführungsfenster Z1 SSB-Zyklen und Z2 TRS-Zyklen umfasst, oder das Ausführungsfenster Z1 SSB-Messzyklen und Z2 TRS-Messzyklen umfasst, wobei Z1 und Z2 positive ganze Zahlen sind; oder das erste Referenzsignal TRS oder SSB ist und das Ausführungsfenster einen längsten von Z1 SSB-Zyklen und Z2 TRS-Zyklen umfasst, oder das Ausführungsfenster einen längsten von Z1 SSB-Messzyklen und Z2 TRS-Messzyklen umfasst.

2. Endgerät (500), umfassend:

einen Speicher (520), der dafür ausgelegt ist, ein Computerprogramm zu speichern, und einen Prozessor (510), der dafür ausgelegt ist, das im Speicher (520) gespeicherte Computerprogramm zum Durchführen folgender Vorgänge aufzurufen und auszuführen:

Erhalten von ersten Angabeinformationen, wobei die ersten Angabeinformationen verwendet werden, um ein erstes Referenzsignal anzugeben, das in einer Verarbeitungsprozedur für eine Sekundärzelle verwendet wird, wobei die Verarbeitungsprozedur Aktivierung umfasst; und Ausführen der Verarbeitungsprozedur auf der Grundlage der ersten Angabeinformationen, wobei die ersten Angabeinformationen verwendet werden, um das Endgerät anzuweisen, die Verarbeitungsprozedur für die Sekundärzelle auszulösen, und verwendet werden, um das in der Verarbeitungsprozedur verwendete erste Referenzsignal anzugeben, wobei die ersten Angabeinformationen in einem "Media Access Control Control Element", MAC CE, getragen werden, wobei das Ausführen der Verarbeitungsprozedur auf der Grundlage der ersten Angabeinformationen umfasst: Ausführen, in einem Ausführungsfenster, der Verarbeitungsprozedur auf der Grundlage der ersten Angabeinformationen, wobei das erste Referenzsignal mindestens ein Referenzsignal umfasst, und **dadurch gekennzeichnet, dass** das Ausführungsfenster einen Referenzsignalzyklus des mindestens einen Referenzsignals umfasst, oder das Ausführungsfenster einen Messzyklus des mindestens einen Referenzsignals umfasst, oder das Ausführungsfenster auf der Grundlage einer Implementierung des Endgeräts bestimmt wird; wobei das mindestens eine Referenzsignal ein "Tracking Reference Signal", TRS, ist und das Ausführungsfenster Y TRS-Zyklen oder Y TRS-Messzyklen umfasst, wobei Y eine positive ganze Zahl ist; oder das erste Referenzsignal TRS und "Synchronous Signal/Physical Broadcast Channel"-Block, SSB, ist und das Ausführungsfenster Z1 SSB-Zyklen und Z2 TRS-Zyklen umfasst, oder das Ausführungsfenster Z1 SSB-Messzyklen und Z2 TRS-Messzyklen umfasst, wobei Z1 und Z2 positive ganze Zahlen sind; oder das erste Referenzsignal TRS oder SSB ist und das Ausführungsfenster einen längsten von Z1 SSB-Zyklen und Z2 TRS-Zyklen umfasst, oder das Ausführungsfenster einen längsten von Z1 SSB-Messzyklen und Z2 TRS-Messzyklen umfasst.

3. Endgerät (500) nach Anspruch 2, wobei das erste Referenzsignal ein Pilotsignal umfasst.

4. Endgerät (500) nach Anspruch 3, wobei das Pilotsignal mindestens eines der folgenden Elemente umfasst: "Synchronous Signal/Physical Broadcast Channel"-Block, SSB, "Channel State Information Reference Signal", CSI-RS, oder "Tracking Reference Signal", TRS.

5. Endgerät (500) nach einem der Ansprüche 2 bis 4, wobei das Verfahren ferner umfasst: Bestimmen einer Unterbrechungsdauer der Verarbeitungsprozedur auf der Grundlage eines Messfensters des ersten Referenzsignals für Intraband-"Dual Connectivity" oder -"Carrier Aggregation", DC/CA.

6. Endgerät (500) nach Anspruch 5, wobei das Bestimmen der Unterbrechungsdauer der Verarbeitungsprozedur auf der Grundlage des Messfensters des ersten Referenzsignals umfasst:

Bestimmen der Unterbrechungsdauer auf der Grundlage einer Dauer einer "SSB Measurement Timing Configuration", SMTC, $T_{SMTC\_duration}$, wenn das erste Referenzsignal SSB ist; und/oder

Bestimmen der Unterbrechungsdauer auf der Grundlage einer Dauer eines Messfensters eines TRS, $T_{TRS\ measurement\ windows\_duration}$, wenn das erste Referenzsignal TRS ist.

7. Drahtloskommunikationsverfahren (200), das von einer Netzvorrichtung durchgeführt wird, umfassend:

Senden (S210) von ersten Angabeinformationen, wobei die ersten Angabeinformationen verwendet werden, um ein erstes Referenzsignal anzugeben, das in einer Verarbeitungsprozedur für eine Sekundärzelle verwendet wird, wobei die Verarbeitungsprozedur Aktivierung umfasst,

wobei die ersten Angabeinformationen verwendet werden, um das Endgerät anzuweisen, die Verarbeitungsprozedur für die Sekundärzelle auszulösen, und dafür ausgelegt sind, das in der Verarbeitungsprozedur verwendete erste Referenzsignal anzugeben,

wobei die ersten Angabeinformationen in einem "Media Access Control Control Element", MAC CE, getragen werden, wobei das erste Referenzsignal mindestens ein Referenzsignal umfasst, und

**dadurch gekennzeichnet, dass** ein Ausführungsfenster zur Ausführung der Verarbeitungsprozedur einen Referenzsignalzyklus des mindestens einen Referenzsignals umfasst, oder das Ausführungsfenster einen Messzyklus des mindestens einen Referenzsignals umfasst, oder das Ausführungsfenster auf der Grundlage einer Implementierung des Endgeräts bestimmt wird;

wobei das mindestens eine Referenzsignal ein "Tracking Reference Signal", TRS, ist und das Ausführungsfenster Y TRS-Zyklen oder Y TRS-Messzyklen umfasst, wobei Y eine positive ganze Zahl ist; oder

das erste Referenzsignal TRS und "Synchronous Signal/Physical Broadcast Channel"-Block, SSB, ist und das Ausführungsfenster Z1 SSB-Zyklen und Z2 TRS-Zyklen umfasst, oder das Ausführungsfenster Z1 SSB-Messzyklen und Z2 TRS-Messzyklen umfasst, wobei Z1 und Z2 positive ganze Zahlen sind; oder

das erste Referenzsignal TRS oder SSB ist und das Ausführungsfenster einen längsten von Z1 SSB-Zyklen und Z2 TRS-Zyklen umfasst, oder das Ausführungsfenster einen längsten von Z1 SSB-Messzyklen und Z2 TRS-Messzyklen umfasst.

8. Netzvorrichtung (500), umfassend:

einen Speicher (520), der dafür ausgelegt ist, ein Computerprogramm zu speichern, und

einen Prozessor (510), der dafür ausgelegt ist, das im Speicher (520) gespeicherte Computerprogramm zum Durchführen folgender Vorgänge aufzurufen und auszuführen:

Senden von ersten Angabeinformationen, wobei die ersten Angabeinformationen verwendet werden, um ein erstes Referenzsignal anzugeben, das in einer Verarbeitungsprozedur für eine Sekundärzelle verwendet wird, wobei die Verarbeitungsprozedur Aktivierung umfasst,

wobei die ersten Angabeinformationen verwendet werden, um das Endgerät anzuweisen, die Verarbeitungsprozedur für die Sekundärzelle auszulösen, und dafür ausgelegt sind, das in der Verarbeitungsprozedur verwendete erste Referenzsignal anzugeben,

wobei die ersten Angabeinformationen in einem "Media Access Control Control Element", MAC CE, getragen werden, wobei das erste Referenzsignal mindestens ein Referenzsignal umfasst, und

**dadurch gekennzeichnet, dass** ein Ausführungsfenster zur Ausführung der Verarbeitungsprozedur einen Referenzsignalzyklus des mindestens einen Referenzsignals umfasst, oder das Ausführungsfenster einen Messzyklus des mindestens einen Referenzsignals umfasst, oder das Ausführungsfenster auf der Grundlage einer Implementierung des Endgeräts bestimmt wird;

wobei das mindestens eine Referenzsignal ein "Tracking Reference Signal", TRS, ist und das Ausführungsfenster Y TRS-Zyklen oder Y TRS-Messzyklen umfasst, wobei Y eine positive ganze Zahl ist; oder

das erste Referenzsignal TRS und "Synchronous Signal/Physical Broadcast Channel"-Block, SSB, ist und das Ausführungsfenster Z1 SSB-Zyklen und Z2 TRS-Zyklen umfasst, oder das Ausführungsfenster Z1 SSB-Messzyklen und Z2 TRS-Messzyklen umfasst, wobei Z1 und Z2 positive ganze Zahlen sind; oder

das erste Referenzsignal TRS oder SSB ist und das Ausführungsfenster einen längsten von Z1 SSB-Zyklen und Z2 TRS-Zyklen umfasst, oder das Ausführungsfenster einen längsten von Z1 SSB-Messzyklen und Z2 TRS-Messzyklen umfasst.

**9.** Netzvorrichtung (500) nach Anspruch 8, wobei das erste Referenzsignal ein Pilotsignal umfasst.

**10.** Netzvorrichtung (500) nach Anspruch 9, wobei das Pilotsignal mindestens eines der folgenden Elemente umfasst: "Synchronous Signal/Physical Broadcast Channel"-Block, SSB, "Channel State Information Reference Signal", CSI-RS, oder "Tracking Reference Signal", TRS.

**11.** Netzvorrichtung (500) nach einem der Ansprüche 8 bis 10, wobei das Verfahren ferner umfasst:
Bestimmen einer Unterbrechungsdauer der Verarbeitungsprozedur auf der Grundlage eines Messfensters des ersten Referenzsignals für Intraband-"Dual Connectivity" oder -"Carrier Aggregation", DC/CA.

**12.** Netzvorrichtung (500) nach Anspruch 11, wobei das Bestimmen der Unterbrechungsdauer der Verarbeitungsprozedur auf der Grundlage des Messfensters des ersten Referenzsignals umfasst:

Bestimmen der Unterbrechungsdauer auf der Grundlage einer Dauer einer "SSB Measurement Timing Configuration", SMTC, $T_{SMTC\_duration}$, wenn das erste Referenzsignal SSB ist; und/oder
Bestimmen der Unterbrechungsdauer auf der Grundlage einer Dauer eines Messfensters eines TRS, $T_{TRS\ measurement\ windows\_duration}$, wenn das erste Referenzsignal TRS ist.

**13.** Endgerät (500) nach Anspruch 2, wobei die ersten Angabeinformationen ferner verwendet werden, um eine Anzahl von Referenzsignalzyklen oder Messzyklen jedes des mindestens einen Referenzsignals anzugeben.

**14.** Netzvorrichtung (500) nach Anspruch 8, wobei die ersten Angabeinformationen ferner verwendet werden, um eine Anzahl von Referenzsignalzyklen oder Messzyklen jedes des mindestens einen Referenzsignals anzugeben.

## Revendications

**1.** Procédé de communication sans fil (200) réalisé par un dispositif terminal, comprenant :

l'obtention (S210) de premières informations d'indication, dans lequel les premières informations d'indication sont utilisées pour indiquer un premier signal de référence utilisé dans une procédure de traitement pour une cellule secondaire, la procédure de traitement comprenant une activation ; et
l'exécution (S220) de la procédure de traitement sur la base des premières informations d'indication,
dans lequel les premières informations d'indication sont utilisées pour ordonner au dispositif terminal de déclencher la procédure de traitement pour la cellule secondaire et sont utilisées pour indiquer le premier signal de référence utilisé dans la procédure de traitement,
dans lequel les premières informations d'indication sont acheminées dans un élément de commande de commande d'accès au support, MAC CE,
dans lequel ladite exécution (S220) de la procédure de traitement sur la base des premières informations d'indication comprend : l'exécution, dans une fenêtre d'exécution, de la procédure de traitement sur la base des premières informations d'indication, le premier signal de référence comprenant au moins un signal de référence, et **caractérisé en ce que**
la fenêtre d'exécution comprend un cycle de signal de référence de l'au moins un signal de référence, ou la fenêtre d'exécution comprend un cycle de mesure de l'au moins un signal de référence, ou la fenêtre d'exécution est déterminée sur la base de la mise en œuvre du dispositif terminal ;
dans lequel l'au moins un signal de référence est un signal de référence de suivi, TRS, et la fenêtre d'exécution comprend Y cycles de TRS ou Y cycles de mesure de TRS, où Y est un nombre entier positif ; ou
le premier signal de référence est un TRS et un bloc de signaux de synchronisation/canaux de diffusion physiques, SSB, et la fenêtre d'exécution comprend Z1 cycles de SSB et Z2 cycles de TRS, ou la fenêtre d'exécution comprend Z1 cycles de mesure de SSB et Z2 cycles de mesure de TRS, où Z1 et Z2 sont des nombres entiers positifs ; ou
le premier signal de référence est un TRS ou un SSB, et la fenêtre d'exécution comprend un cycle le plus long parmi Z1 cycles de SSB et Z2 cycles de TRS, ou la fenêtre d'exécution comprend un cycle le plus long parmi Z1 cycles de mesure de SSB et Z2 cycles de mesure de TRS.

**2.** Dispositif terminal (500), comprenant :

une mémoire (520), configurée pour stocker un programme informatique, et

un processeur (510), configuré pour invoquer et exécuter le programme informatique stocké dans la mémoire (520) pour réaliser :

l'obtention de premières informations d'indication, dans lequel les premières informations d'indication sont utilisées pour indiquer un premier signal de référence utilisé dans une procédure de traitement pour une cellule secondaire, la procédure de traitement comprenant une activation ; et

l'exécution de la procédure de traitement sur la base des premières informations d'indication,

dans lequel les premières informations d'indication sont utilisées pour ordonner au dispositif terminal de déclencher la procédure de traitement pour la cellule secondaire et sont utilisées pour indiquer le premier signal de référence utilisé dans la procédure de traitement,

dans lequel les premières informations d'indication sont acheminées dans un élément de commande de commande d'accès au support, MAC CE,

dans lequel ladite exécution de la procédure de traitement sur la base des premières informations d'indication comprend : l'exécution, dans une fenêtre d'exécution, de la procédure de traitement sur la base des premières informations d'indication, le premier signal de référence comprenant au moins un signal de référence, et **caractérisé en ce que**

la fenêtre d'exécution comprend un cycle de signal de référence de l'au moins un signal de référence, ou la fenêtre d'exécution comprend un cycle de mesure de l'au moins un signal de référence, ou la fenêtre d'exécution est déterminée sur la base de la mise en œuvre du dispositif terminal ;

dans lequel l'au moins un signal de référence est un signal de référence de suivi, TRS, et la fenêtre d'exécution comprend Y cycles de TRS ou Y cycles de mesure de TRS, où Y est un nombre entier positif ; ou le premier signal de référence est un TRS et un bloc de signaux de synchronisation/canaux de diffusion physiques, SSB, et la fenêtre d'exécution comprend Z1 cycles de SSB et Z2 cycles de TRS, ou la fenêtre d'exécution comprend Z1 cycles de mesure de SSB et Z2 cycles de mesure de TRS, où Z1 et Z2 sont des nombres entiers positifs ; ou

le premier signal de référence est un TRS ou un SSB, et la fenêtre d'exécution comprend un cycle le plus long parmi Z1 cycles de SSB et Z2 cycles de TRS, ou la fenêtre d'exécution comprend un cycle le plus long parmi Z1 cycles de mesure de SSB et Z2 cycles de mesure de TRS.

3. Dispositif terminal (500) selon la revendication 2, dans lequel le premier signal de référence comprend un signal pilote.

4. Dispositif terminal (500) selon la revendication 3, dans lequel le signal pilote comprend au moins l'un de : un bloc de signaux de synchronisation/canaux de diffusion physiques, SSB, un signal de référence d'informations d'état de canal, CSI-RS, ou un signal de référence de suivi, TRS.

5. Dispositif terminal (500) selon l'une quelconque des revendications 2 à 4, dans lequel le procédé comprend en outre : la détermination d'une durée d'interruption de la procédure de traitement sur la base d'une fenêtre de mesure du premier signal de référence, pour une double connectivité ou une agrégation de porteuses, DC/CA, intrabande.

6. Dispositif terminal (500) selon la revendication 5, dans lequel ladite détermination de la durée d'interruption de la procédure de traitement sur la base de la fenêtre de mesure du premier signal de référence comprend :

la détermination de la durée d'interruption sur la base d'une durée d'une configuration de durée de mesure de SSB, SMTC, $T_{durée\_SMTC}$, lorsque le premier signal de référence est un SSB ; et/ou

la détermination de la durée d'interruption sur la base d'une durée d'une fenêtre de mesure d'un TRS, $T_{durée\_fenêtre\ de\ mesure\ TRS}$, lorsque le premier signal de référence est un TRS.

7. Procédé de communication sans fil (200) réalisé par un dispositif de réseau, comprenant :

la transmission (S210) de premières informations d'indication, dans lequel les premières informations d'indication sont utilisées pour indiquer un premier signal de référence utilisé dans une procédure de traitement pour une cellule secondaire, la procédure de traitement comprenant une activation ;

dans lequel les premières informations d'indication sont utilisées pour ordonner à un dispositif terminal de déclencher la procédure de traitement pour la cellule secondaire et configurées pour indiquer le premier signal de référence utilisé dans la procédure de traitement,

dans lequel les premières informations d'indication sont acheminées dans un élément de commande de commande d'accès au support, MAC CE,

dans lequel le premier signal de référence comprend au moins un signal de référence, et **caractérisé en ce**

**qu'**une fenêtre d'exécution pour exécuter la procédure de traitement comprend un cycle de signal de référence de l'au moins un signal de référence, ou la fenêtre d'exécution comprend un cycle de mesure de l'au moins un signal de référence, ou la fenêtre d'exécution est déterminée sur la base de la mise en œuvre du dispositif terminal ;

dans lequel l'au moins un signal de référence est un signal de référence de suivi, TRS, et la fenêtre d'exécution comprend Y cycles de TRS ou Y cycles de mesure de TRS, où Y est un nombre entier positif ; ou

le premier signal de référence est un TRS et un bloc de signaux de synchronisation/canaux de diffusion physiques, SSB, et la fenêtre d'exécution comprend Z1 cycles de SSB et Z2 cycles de TRS, ou la fenêtre d'exécution comprend Z1 cycles de mesure de SSB et Z2 cycles de mesure de TRS, où Z1 et Z2 sont des nombres entiers positifs ; ou

le premier signal de référence est un TRS ou un SSB, et la fenêtre d'exécution comprend un cycle le plus long parmi Z1 cycles de SSB et Z2 cycles de TRS, ou la fenêtre d'exécution comprend un cycle le plus long parmi Z1 cycles de mesure de SSB et Z2 cycles de mesure de TRS.

8. Dispositif de réseau (500), comprenant :

une mémoire (520), configurée pour stocker un programme informatique, et
un processeur (510), configuré pour invoquer et exécuter le programme informatique stocké dans la mémoire (520) pour réaliser :

la transmission de premières informations d'indication, dans lequel les premières informations d'indication sont utilisées pour indiquer un premier signal de référence utilisé dans une procédure de traitement pour une cellule secondaire, la procédure de traitement comprenant une activation,

dans lequel les premières informations d'indication sont utilisées pour ordonner à un dispositif terminal de déclencher la procédure de traitement pour la cellule secondaire et configurées pour indiquer le premier signal de référence utilisé dans la procédure de traitement,

dans lequel les premières informations d'indication sont acheminées dans un élément de commande de commande d'accès au support, MAC CE,

dans lequel le premier signal de référence comprend au moins un signal de référence, et **caractérisé en ce qu'**une fenêtre d'exécution pour exécuter la procédure de traitement comprend un cycle de signal de référence de l'au moins un signal de référence, ou la fenêtre d'exécution comprend un cycle de mesure de l'au moins un signal de référence, ou la fenêtre d'exécution est déterminée sur la base de la mise en œuvre du dispositif terminal ;

dans lequel l'au moins un signal de référence est un signal de référence de suivi, TRS, et la fenêtre d'exécution comprend Y cycles de TRS ou Y cycles de mesure de TRS, où Y est un nombre entier positif ; ou

le premier signal de référence est un TRS et un bloc de signaux de synchronisation/canaux de diffusion physiques, SSB, et la fenêtre d'exécution comprend Z1 cycles de SSB et Z2 cycles de TRS, ou la fenêtre d'exécution comprend Z1 cycles de mesure de SSB et Z2 cycles de mesure de TRS, où Z1 et Z2 sont des nombres entiers positifs ; ou

le premier signal de référence est un TRS ou un SSB, et la fenêtre d'exécution comprend un cycle le plus long parmi Z1 cycles de SSB et Z2 cycles de TRS, ou la fenêtre d'exécution comprend un cycle le plus long parmi Z1 cycles de mesure de SSB et Z2 cycles de mesure de TRS.

9. Dispositif de réseau (500) selon la revendication 8, dans lequel le premier signal de référence comprend un signal pilote.

10. Dispositif de réseau (500) selon la revendication 9, dans lequel le signal pilote comprend au moins l'un de :
un bloc de signaux de synchronisation/canaux de diffusion physiques, SSB, un signal de référence d'informations d'état de canal, CSI-RS, ou un signal de référence de suivi, TRS.

11. Dispositif de réseau (500) selon l'une quelconque des revendications 8 à 10, dans lequel le procédé comprend en outre :
la détermination d'une durée d'interruption de la procédure de traitement sur la base d'une fenêtre de mesure du premier signal de référence, pour une double connectivité ou une agrégation de porteuses, DC/CA, intrabande.

12. Dispositif de réseau (500) selon la revendication 11, dans lequel ladite détermination de la durée d'interruption de la procédure de traitement sur la base de la fenêtre de mesure du premier signal de référence comprend :

la détermination de la durée d'interruption sur la base d'une durée d'une configuration de durée de mesure de SSB, SMTC, $T_{durée\_SMTC}$, lorsque le premier signal de référence est un SSB ; et/ou

la détermination de la durée d'interruption sur la base d'une durée d'une fenêtre de mesure d'un TRS, $T_{durée\_fenêtre\ de\ mesure\ TRS}$, lorsque le premier signal de référence est un TRS.

13. Dispositif terminal (500) selon la revendication 2, dans lequel les premières informations d'indication sont en outre utilisées pour indiquer un nombre de cycles de signal de référence ou de cycles de mesure de chacun de l'au moins un signal de référence.

14. Dispositif de réseau (500) selon la revendication 8, dans lequel les premières informations d'indication sont en outre utilisées pour indiquer un nombre de cycles de signal de référence ou de cycles de mesure de chacun de l'au moins un signal de référence.

FIG. 1

FIG. 2

Network device
sends SCell
activation
command in PCell

Interruption
duration in
PCell

DCI trigger signaling used
to trigger assisting
aperiodic TRS in PCell

PCell

slot n

UE transmits
ACK for
activation
command

Time period that
UE turns on RF
chain for SCell

Assisting
aperiodic TRS in
Scell, triggered by
the DCI in PCell

SCell

Trigger offset

FIG. 3

200

| Terminal device | | Network device |

S210, obtaining first indication information, wherein
the first indication information is used to indicate a first
reference signal used in a processing procedure for a
secondary cell, the processing procedure comprising at
least one of activation, deactivation, addition or deletion

S220, executing the processing
procedure based on the first indication
information

FIG. 4

300

| Terminal device |
| :---: |

310 320

| Obtaining unit |—| Processing unit |

FIG. 5

400

| Network device |
| :---: |

410

| Transmitting unit |

FIG. 6

500

| Communication device |
| :---: |

520 510

| Memory | | Processor |

| Transceiver | 530

FIG. 7

600

Chip

630

610

Processor

620

Memory

640

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3742845 A1

**Non-patent literature cited in the description**

- **MEDIATEK INC**. Efficient and low latency SCell data transmission for NR CA. *3GPP DRAFT; R1-1911062*, 05 October 2019